# EUROPEAN PATENT APPLICATION

(11) **EP 3 941 148 A1**
(43) Date of publication of application: **19.01.2022**
(21) Application number: 20784423.4
(22) Date of filing: 11.03.2020
(51) Int. Cl.: H04W 74/00

(54) **COMMUNICATION METHOD, DEVICE AND EQUIPMENT**

(30) Priority: 29.03.2019 CN 201910253479
(71) Applicant: Huawei Technologies Co., Ltd., Shenzhen, Guangdong 518129 (CN)
(72) Inventor: YANG, Shuigen, Shenzhen, Guangdong 518129 (CN); HAN, Feng, Shenzhen, Guangdong 518129 (CN); JIN, Yinghao, Shenzhen, Guangdong 518129 (CN); MA, Chuan, Shenzhen, Guangdong 518129 (CN)
(74) Representative: Gill Jennings & Every LLP
(86) International application number: PCT/CN2020/078878
(87) International publication number: WO 2020/199882

(57) **Abstract**

Embodiments of this application provide a communication method, a communication apparatus, and a device. The method includes: A network device receives first information sent by a terminal device, where the first information is information about a two-step random access process of the terminal device; and the network device updates a random access configuration based on the first information. Communication reliability is improved.

## Description

This application claims priority to Chinese Patent Application No. 201910253479.2, filed with the Chinese Patent Office on March 29, 2019 and entitled "COMMUNICATION METHOD, COMMUNICATION APPARATUS, AND DEVICE", which is incorporated herein by reference in its entirety.

### TECHNICAL FIELD

This application relates to the field of communication technologies, and in particular, to a communication method, a communication apparatus, and a device.

### BACKGROUND

In a communication process, a terminal device may access a network device through random access. For example, the network device may be a base station.

In an actual application process, the network device configures a random access resource used by the terminal device to access the network device, and the terminal device initiates random access by using the random access resource indicated by a random access configuration received from the network device. However, in a conventional technology, with changes of a network condition, for example, a change of a radio channel and a change of network load, the random access configuration of the network device cannot well adapt to a current network condition in some cases, causing a relatively low probability of successful random access of the terminal device to the network device.

### SUMMARY

This application provides a communication method, a communication apparatus, and a device, to improve communication reliability.

According to a first aspect, an embodiment of this application provides a communication method. A network device receives first information sent by a terminal device, and updates a random access configuration based on the first information, where the first information is information about a two-step random access process of the terminal device.

In the foregoing process, after the terminal device accesses the network device through the 2-step RACH, the terminal device sends the information about the two-step random access process of the terminal device to the network device, so that the network device can optimize the random access configuration based on the first information, thereby improving a random access success probability of the terminal device, and further improving communication efficiency.

In a possible implementation, the first information includes at least one of the following information: a quantity of random access preambles sent by the terminal device in the two-step random access process; indication information used to indicate whether contention of at least one random access preamble is detected in the sent random access preamble; and indication information used to indicate whether contention of at least one time-frequency resource is detected in a time-frequency resource used for a sent payload.

In the foregoing process, the network device may determine the information about the two-step random access process of the terminal device based on the first information reported by the terminal device, to further accurately optimize the random access configuration based on the first information, thereby improving the random access success probability of the terminal device, and further improving the communication efficiency.

In a possible implementation, the random access configuration is a random access configuration corresponding to a cell in which the terminal device is located; or the random access configuration is a random access configuration corresponding to a synchronization signal and physical broadcast channel block SSB used when the terminal device performs random access.

In a possible implementation, the network device includes a centralized unit CU and a distributed unit DU, and the CU is connected to the DU. Correspondingly, that a network device receives first information sent by a terminal device includes: The CU receives the first information sent by the terminal device. That the network device updates a random access configuration based on the first information includes: The CU updates the random access configuration based on the first information. After the CU updates the random access configuration based on the first information, the CU sends an updated random access configuration to the DU.

In the foregoing process, when the network device is of a CU-DU architecture, after the terminal device accesses the CU through the 2-step RACH, the CU may obtain the information about the two-step random access process of the terminal device, and optimizes the random access configuration based on the first information, thereby improving the random access success probability of the terminal device, and further improving the communication efficiency.

In a possible implementation, before the CU updates the random access configuration based on the first information, the method further includes: The CU receives the random access configuration sent by the DU.

In a possible implementation, the network device includes a CU and a DU, and the CU includes a centralized unit-control plane CU-CP and a centralized unit-user plane CU-UP. Correspondingly, that a network device receives first information sent by a terminal device includes: The CU-CP receives the first information sent by the terminal device. That the network device updates a random access configuration based on the first information includes: The CU-CP updates the random access configuration based on the first information. After the CU-CP updates the random access configuration based on the first information, the CU-CP sends an updated random access configuration to the DU.

In the foregoing process, after the terminal device accesses the CU-CP through the 2-step RACH, the CU-CP may obtain the information about the two-step random access process of the terminal device, and optimizes the random access configuration based on the first information, thereby improving the random access success probability of the terminal device, and further improving the communication efficiency.

In a possible implementation, before the CU-CP updates the random access configuration based on the first information, the method further includes: The CU-CP receives the random access configuration sent by the DU.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

In the foregoing process, the information in the random access configuration is optimized, to improve the random access success probability of the terminal device, and further improve the communication efficiency.

According to a second aspect, an embodiment of this application provides a communication apparatus, including a receiver, a processor, and a memory, where the memory stores program instructions, and the processor executes the program instructions in the memory, where
the receiver is configured to receive first information sent by a terminal device, where the first information is information about a two-step random access process of the terminal device; and
the processor is configured to update a random access configuration based on the first information.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, the random access configuration is a random access configuration corresponding to a cell in which the terminal device is located; or
the random access configuration is a random access configuration corresponding to a synchronization signal and physical broadcast channel block SSB used when the terminal device performs random access.

In a possible implementation, a network device includes a centralized unit CU and a distributed unit DU, and the CU is connected to the DU; and the apparatus further includes a transmitter, where
the transmitter is configured to send an updated random access configuration to the DU.

In a possible implementation, the receiver is further configured to: before the processor updates the random access configuration based on the first information, receive the random access configuration sent by the DU.

In a possible implementation, a network device includes a CU and a DU, and the CU includes a centralized unit-control plane CU-CP and a centralized unit-user plane CU-UP; and
a transmitter is further configured to send an updated random access configuration to the DU.

In a possible implementation, the receiver is further configured to: before the processor updates the random access configuration based on the first information, receive the random access configuration sent by the DU.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

According to a third aspect, an embodiment of this application provides a communication apparatus, including a receiving module and a processing module, where
the receiving module is configured to receive first information sent by a terminal device, where the first information is information about a two-step random access process of the terminal device; and
the processing module is configured to update a random access configuration based on the first information.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, the random access configuration is a random access configuration corresponding to a cell in which the terminal device is located; or
the random access configuration is a random access configuration corresponding to a synchronization signal and physical broadcast channel block SSB used when the terminal device performs random access.

In a possible implementation, a network device includes a centralized unit CU and a distributed unit DU, and the CU is connected to the DU; and the apparatus further includes a sending module, where
the sending module is configured to send an updated random access configuration to the DU.

In a possible implementation, the receiving module is further configured to: before the processing module updates the random access configuration based on the first information, receive the random access configuration sent by the DU.

In a possible implementation, a network device includes a CU and a DU, and the CU includes a centralized unit-control plane CU-CP and a centralized unit-user plane CU-UP; and
a sending module is further configured to send an updated random access configuration to the DU.

In a possible implementation, the receiving module is further configured to: before the processing module updates the random access configuration based on the first information, receive the random access configuration sent by the DU.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

According to a fourth aspect, an embodiment of this application provides a computer-readable storage medium. The storage medium is configured to store a computer program. When the computer program is executed by a computer or a processor, the computer program is used to implement the communication method according to any one of the first aspect or the possible implementations of the first aspect.

According to a fifth aspect, an embodiment of this application provides a communication method. A terminal device obtains first information, and sends the first information to a network device, where the first information is information about a two-step random access process of the terminal device, and the first information is used to enable the network device to update a random access configuration.

In the foregoing process, after the terminal device accesses the network device through the 2-step RACH, the terminal device sends the information about the two-step random access process of the terminal device to the network device, so that the network device can optimize the random access configuration based on the first information, thereby improving a random access success probability of the terminal device, and further improving communication efficiency.

In a possible implementation, the first information includes at least one of the following information: a quantity of random access preambles sent by the terminal device in the two-step random access process; indication information used to indicate whether contention of at least one random access preamble is detected in the sent random access preamble; and indication information used to indicate whether contention of at least one time-frequency resource is detected in a time-frequency resource used for a sent payload.

In the foregoing process, after the terminal device reports the first information, the network device may determine the information about the two-step random access process of the terminal device based on the first information, to further accurately optimize the random access configuration based on the first information, thereby improving the random access success probability of the terminal device, and further improving the communication efficiency.

In a possible implementation, the random access configuration is a random access configuration corresponding to a cell in which the terminal device is located; or the random access configuration is a random access configuration corresponding to a synchronization signal and physical broadcast channel block SSB used when the terminal device performs random access.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

In the foregoing process, the information in the random access configuration is optimized, to improve the random access success probability of the terminal device, and further improve the communication efficiency.

According to a sixth aspect, an embodiment of this application provides a communication apparatus, including a processor, a transmitter, and a memory, where the memory stores program instructions, and the processor executes the program instructions in the memory, where
the processor is configured to obtain first information, where the first information is information about a two-step random access process of a terminal device; and
the transmitter is configured to send the first information to a network device.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, the random access configuration is a random access configuration corresponding to a cell in which the terminal device is located; or
the random access configuration is a random access configuration corresponding to a synchronization signal and physical broadcast channel block SSB used when the terminal device performs random access.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

According to a seventh aspect, an embodiment of this application provides a communication apparatus, including a processing module and a sending module, where
the processing module is configured to obtain first information, where the first information is information about a two-step random access process of a terminal device; and
the sending module is configured to send the first information to a network device.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, the random access configuration is a random access configuration corresponding to a cell in which the terminal device is located; or
the random access configuration is a random access configuration corresponding to a synchronization signal and physical broadcast channel block SSB used when the terminal device performs random access.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

According to an eighth aspect, an embodiment of this application provides a computer-readable storage medium. The storage medium is configured to store a computer program. When the computer program is executed by a computer or a processor, the computer program is used to implement the communication method according to any one of the fifth aspect or the possible implementations of the fifth aspect.

According to a ninth aspect, an embodiment of this application provides a communication method. The method includes:
A centralized unit CU receives first information sent by a terminal device, where the first information is information about a four-step random access process of the terminal device;
the CU updates a random access configuration based on the first information; and
the CU sends an updated random access configuration to a distributed unit DU.

In the foregoing process, after the terminal device accesses the DU through the 4-step RACH, the terminal device sends the first information to the CU, where the first information may be the information about the four-step random access process of the terminal device, so that the CU can optimize the RACH configuration based on the first information, thereby improving a random access success probability of the terminal device, and further improving communication efficiency.

In a possible implementation, before the CU updates the random access configuration based on the first information, the method further includes:
The CU receives the random access configuration sent by the DU.

In a possible implementation, the CU includes a centralized unit-control plane CU-CP and a centralized unit-user plane CU-UP;
that a CU receives first information sent by a terminal device includes:
the CU-CP receives the first information sent by the terminal device;
that the CU updates a random access configuration based on the first information includes:
   the CU-CP updates the random access configuration based on the first information;
that the CU sends an updated random access configuration to a DU includes:
   the CU-CP sends the updated random access configuration to the DU; and
that the CU receives the random access configuration sent by the DU includes:
   the CU-CP receives the random access configuration sent by the DU.

In the foregoing process, the CU-CP may receive the first information sent by the terminal device, update the random access configuration based on the first information, and send the updated random access configuration to the DU, thereby improving the random access success probability of the terminal device, and further improving the communication efficiency.

In a possible implementation, the first information includes at least one of the following information:
a quantity of random access preambles sent by the terminal device in the four-step random access process; and
indication information used to indicate whether contention of at least one random access preamble is detected in the sent random access preamble.

In the foregoing process, the CU may determine the information about the four-step random access process of the terminal device based on the first information reported by the terminal device, to further accurately optimize the random access configuration based on the first information, thereby improving the random access success probability of the terminal device, and further improving the communication efficiency.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

In the foregoing process, the information in the random access configuration is optimized, to improve the random access success probability of the terminal device, and further improve the communication efficiency.

According to a tenth aspect, an embodiment of this application provides a communication apparatus, used in centralized unit CU. The apparatus includes a receiver, a processor, a transmitter, and a memory, where the memory stores program instructions, and the processor executes the program instructions in the memory, where
the receiver is configured to receive first information sent by a terminal device, where the first information is information about a four-step random access process of the terminal device;
the processor is configured to update a random access configuration based on the first information; and
the transmitter is configured to send an updated random access configuration to a distributed unit DU.

In a possible implementation, the receiver is further configured to: before the processor updates the random access configuration based on the first information, receive the random access configuration sent by the DU.

In a possible implementation, the CU includes a centralized unit-control plane CU-CP and a centralized unit-user plane CU-UP, and the communication apparatus is used in the CU-CP.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

According to an eleventh aspect, an embodiment of this application provides a communication apparatus, used in a centralized unit CU. The apparatus includes a receiving module, a processing module, and a sending module, where
the receiving module is configured to receive first information sent by a terminal device, where the first information is information about a four-step random access process of the terminal device;
the processing module is configured to update a random access configuration based on the first information; and
the sending module is configured to send an updated random access configuration to a distributed unit DU.

In a possible implementation, the receiving module is further configured to: before the processing module updates the random access configuration based on the first information, receive the random access configuration sent by the DU.

In a possible implementation, the CU includes a centralized unit-control plane CU-CP and a centralized unit-user plane CU-UP, and the communication apparatus is used in the CU-CP.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

According to a twelfth aspect, an embodiment of this application provides a computer-readable storage medium. The storage medium is configured to store a computer program. When the computer program is executed by a computer or a processor, the computer program is used to implement the communication method according to any one of the ninth aspect or the possible implementations of the ninth aspect.

According to a thirteenth aspect, an embodiment of this application provides a communication method, including:
A terminal device obtains first information, where the first information is information about a four-step random access process of the terminal device; and
the terminal device sends the first information to a centralized unit CU, where the first information is used to enable the CU to update a random access configuration.

In the foregoing process, after the terminal device accesses the DU through the 4-step RACH, the terminal device sends the first information to the CU, where the first information may be the information about the four-step random access process of the terminal device, so that the CU can optimize the random access configuration based on the first information, thereby improving a random access success probability of the terminal device, and further improving communication efficiency.

In a possible implementation, the first information includes at least one of the following information:
a quantity of random access preambles sent by the terminal device in the four-step random access process; and
indication information used to indicate whether contention of at least one random access preamble is detected in the sent random access preamble.

In the foregoing process, after the terminal device sends the first information to the CU, the CU may determine the information about the four-step random access process of the terminal device based on the first information reported by the terminal device, to further accurately optimize the random access configuration based on the first information, thereby improving the random access success probability of the terminal device, and further improving the communication efficiency.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

In the foregoing process, the information in the random access configuration is optimized, to improve the random access success probability of the terminal device, and further improve the communication efficiency.

According to a fourteenth aspect, an embodiment of this application provides a communication apparatus, including a processor, a transmitter, and a memory, where the memory stores program instructions, and the processor executes the program instructions in the memory, where
the processor is configured to obtain first information, where the first information is information about a four-step random access process of a terminal device; and
the transmitter is configured to send the first information to a centralized unit CU, where the first information is used to enable the CU to update a random access configuration.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

According to a fifteenth aspect, an embodiment of this application provides a communication apparatus, including a processing module and a sending module, where
the processing module is configured to obtain first information, where the first information is information about a four-step random access process of a terminal device; and
the sending module is configured to send the first information to a centralized unit CU, where the first information is used to enable the CU to update a random access configuration.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

According to a sixteenth aspect, an embodiment of this application provides a computer-readable storage medium. The storage medium is configured to store a computer program. When the computer program is executed by a computer or a processor, the computer program is used to implement the communication method according to any one of the thirteenth aspect or the possible implementations of the thirteenth aspect.

According to a seventeenth aspect, an embodiment of this application provides a communication method, including:
A first network device obtains a random access configuration, where the random access configuration includes at least one of the following: a random access configuration of two-step random access, and a random access configuration corresponding to a synchronization signal and physical broadcast channel block SSB of four-step random access; and
the first network device sends the random access configuration to a second network device.

In the foregoing process, the first network device may obtain the random access configuration of the first network device, and send the random access configuration to the second network device. In this way, the second network device may update a random access configuration of the second network device based on the random access configuration of the first network device, so that a conflict occurrence possibility when a terminal device performs random access based on the random access configuration is reduced, thereby improving a random access success probability of the terminal device, and further improving communication efficiency.

In a possible implementation, the random access configuration of the two-step random access includes at least one of the following: a physical random access channel PRACH configuration of a random access preamble in the two-step random access, and a time-frequency resource configuration of a payload in the two-step random access.

In a possible implementation, the PRACH configuration is a PRACH configuration corresponding to a cell or a PRACH configuration corresponding to an SSB.

In a possible implementation, the random access configuration corresponding to the SSB of the four-step random access includes a PRACH configuration of a random access preamble corresponding to each SSB of the four-step random access.

In a possible implementation, that the first network device sends the random access configuration to a second network device includes:
The first network device sends a first message to the second network device, where the first message includes the random access configuration.

In a possible implementation, the first message is an Xn setup request message, an X2 setup request message, or an F1 setup request message;
the first message is an Xn setup response message, an X2 setup response message, or an F1 setup response message;
the first message is a next-generation radio access network node configuration update message or a centralized unit configuration update message; or
the first message is a next-generation radio access network node configuration update acknowledge message or a distributed unit configuration update acknowledge message.

In the foregoing process, the first network device may send the random access configuration to the second network device by using an existing message, so that signaling overheads are relatively low.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the first network device is a fifth CU, and the second network device is a DU connected to the fifth CU.

In a possible implementation, the first network device is a CU-CP in a sixth CU, and the second network device is a DU connected to the sixth CU.

In a possible implementation, the random access configuration further includes a random access configuration corresponding to a cell of the four-step random access. In the foregoing four network architectures, the random access configuration further includes the random access configuration corresponding to the cell of the four-step random access.

According to an eighteenth aspect, an embodiment of this application provides a communication apparatus, including a processor, a transmitter, and a memory, where the memory stores program instructions, and the processor executes the program instructions in the memory, where
the processor is configured to obtain a random access configuration, where the random access configuration includes at least one of the following: a random access configuration of two-step random access, and a random access configuration corresponding to a synchronization signal and physical broadcast channel block SSB of four-step random access; and
the transmitter is configured to send the random access configuration to a second network device.

In a possible implementation, the random access configuration of the two-step random access includes at least one of the following: a physical random access channel PRACH configuration of a random access preamble in the two-step random access, and a time-frequency resource configuration of a payload in the two-step random access.

In a possible implementation, the PRACH configuration is a PRACH configuration corresponding to a cell or a PRACH configuration corresponding to an SSB.

In a possible implementation, the random access configuration corresponding to the SSB of the four-step random access includes a PRACH configuration of a random access preamble corresponding to each SSB of the four-step random access.

In a possible implementation, the transmitter is specifically configured to:
send a first message to the second network device, where the first message includes the random access configuration.

In a possible implementation, the first message is an Xn interface setup request message, an X2 interface setup request message, or an F1 setup request message;
the first message is an Xn setup response message, an X2 setup response message, or an F1 setup response message;
the first message is a next-generation radio access network node configuration update message or a centralized unit configuration update message; or
the first message is a next-generation radio access network node configuration update acknowledge message or a distributed unit configuration update acknowledge message.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the first network device is a fifth CU, and the second network device is a DU connected to the fifth CU.

In a possible implementation, the first network device is a CU-CP in a sixth CU, and the second network device is a DU connected to the sixth CU.

In a possible implementation, the random access configuration further includes a random access configuration corresponding to a cell of the four-step random access.

According to a nineteenth aspect, an embodiment of this application provides a communication apparatus, including a processing module and a sending module, where
the processing module is configured to obtain a random access configuration, where the random access configuration includes at least one of the following: a random access configuration of two-step random access, and a random access configuration corresponding to a synchronization signal and physical broadcast channel block SSB of four-step random access; and
the sending module is configured to send the random access configuration to a second network device.

In a possible implementation, the random access configuration of the two-step random access includes at least one of the following: a physical random access channel PRACH configuration of a random access preamble in the two-step random access, and a time-frequency resource configuration of a payload in the two-step random access.

In a possible implementation, the PRACH configuration is a PRACH configuration corresponding to a cell or a PRACH configuration corresponding to an SSB.

In a possible implementation, the random access configuration corresponding to the SSB of the four-step random access includes a PRACH configuration of a random access preamble corresponding to each SSB of the four-step random access.

In a possible implementation, the sending module is specifically configured to:
send a first message to the second network device, where the first message includes the random access configuration.

In a possible implementation, the first message is an Xn interface setup request message, an X2 interface setup request message, or an F1 setup request message;
the first message is an Xn setup response message, an X2 setup response message, or an F1 setup response message;
the first message is a next-generation radio access network node configuration update message or a centralized unit configuration update message; or
the first message is a next-generation radio access network node configuration update acknowledge message or a distributed unit configuration update acknowledge message.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the first network device is a fifth CU, and the second network device is a DU connected to the fifth CU.

In a possible implementation, the first network device is a CU-CP in a sixth CU, and the second network device is a DU connected to the sixth CU.

In a possible implementation, the random access configuration further includes a random access configuration corresponding to a cell of the four-step random access.

According to a twentieth aspect, an embodiment of this application provides a computer-readable storage medium. The storage medium is configured to store a computer program. When the computer program is executed by a computer or a processor, the computer program is used to implement the communication method according to any one of the seventeenth aspect or the possible implementations of the seventeenth aspect.

According to a twenty-first aspect, an embodiment of this application provides a communication method, including:
A first network device obtains a random access configuration corresponding to a terminal device, where the random access configuration is determined by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the first network device sends the random access configuration to the terminal device, where the random access configuration is used to enable the terminal device to access the second network device based on the random access configuration.

In the foregoing process, in a process in which the terminal device is handed over from the first network device to the second network device, the second network device determines the dedicated PRACH configuration for the terminal device, so that the terminal device can access the second network device based on the dedicated PRACH configuration. Because the PRACH configuration is dedicated to the terminal device, a conflict between the terminal device and another terminal device in the handover process is avoided, thereby improving a random access success probability of the terminal device in the handover process, and further improving communication efficiency.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, that a first network device obtains a random access configuration corresponding to a terminal device includes:
The first network device receives a handover request acknowledge message sent by the second network device, where the handover request acknowledge message includes the random access configuration.

In the foregoing process, the second network device may send the random access configuration to the first network device by using an existing message, so that signaling overheads are relatively low.

In a possible implementation, before the first network device receives the handover request acknowledge message sent by the second network device, the method further includes:
The first network device sends a handover request message to the second network device, where the handover request message includes an identifier of the terminal device.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, that a first network device obtains a random access configuration corresponding to a terminal device includes:
The first network device receives a terminal device context setup response message sent by the second network device, where the terminal device context setup response message includes the random access configuration.

In the foregoing process, the second network device may send the random access configuration to the first network device by using an existing message, so that signaling overheads are relatively low.

In a possible implementation, before the first network device receives the terminal device context setup response message sent by the second network device, the method further includes:
The first network device sends a terminal device context setup request message to the second network device, where the terminal device context setup request message includes an identifier of the terminal device.

In a possible implementation, that the first network device sends the random access configuration to the terminal device includes:
The first network device sends an RRC reconfiguration message to the terminal device, where the RRC reconfiguration message includes the random access configuration.

In the foregoing process, the first network device may send the random access configuration to the second network device by using an existing message, so that signaling overheads are relatively low.

According to a twenty-second aspect, an embodiment of this application provides a communication apparatus, including a processor, a transmitter, and a memory, where the memory stores program instructions, and the processor executes the program instructions in the memory, where
the processor is configured to obtain a random access configuration corresponding to a terminal device, where the random access configuration is determined by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the transmitter is configured to send the random access configuration to the terminal device, where the random access configuration is used to enable the terminal device to access the second network device based on the random access configuration.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the apparatus further includes a receiving module, where
the receiving module is configured to receive a handover request acknowledge message sent by the second network device, where the handover request acknowledge message includes the random access configuration.

In a possible implementation, the sending module is further configured to: before the receiving module receives the handover request acknowledge message sent by the second network device, send a handover request message to the second network device, where the handover request message includes an identifier of the terminal device.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, that the first network device obtains the random access configuration corresponding to the terminal device includes:
The first network device receives a terminal device context setup response message sent by the second network device, where the terminal device context setup response message includes the random access configuration.

In the foregoing process, the second network device may send the random access configuration to the first network device by using an existing message, so that signaling overheads are relatively low.

In a possible implementation, before the first network device receives the terminal device context setup response message sent by the second network device, the method further includes:
The first network device sends a terminal device context setup request message to the second network device, where the terminal device context setup request message includes an identifier of the terminal device.

In a possible implementation, the sending module is specifically configured to send an RRC reconfiguration message to the terminal device, where the RRC reconfiguration message includes the random access configuration.

According to a twenty-third aspect, an embodiment of this application provides a communication apparatus, including a processing module and a sending module, where
the processing module is configured to obtain a random access configuration corresponding to a terminal device, where the random access configuration is determined by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the sending module is configured to send the random access configuration to the terminal device, where the random access configuration is used to enable the terminal device to access the second network device based on the random access configuration.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the apparatus further includes a receiving module, where
the receiving module is configured to receive a handover request acknowledge message sent by the second network device, where the handover request acknowledge message includes the random access configuration.

In a possible implementation, the sending module is further configured to: before the receiving module receives the handover request acknowledge message sent by the second network device, send a handover request message to the second network device, where the handover request message includes an identifier of the terminal device.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, that the first network device obtains the random access configuration corresponding to the terminal device includes:
The first network device receives a terminal device context setup response message sent by the second network device, where the terminal device context setup response message includes the random access configuration.

In the foregoing process, the second network device may send the random access configuration to the first network device by using an existing message, so that signaling overheads are relatively low.

In a possible implementation, before the first network device receives the terminal device context setup response message sent by the second network device, the method further includes:
The first network device sends a terminal device context setup request message to the second network device, where the terminal device context setup request message includes an identifier of the terminal device.

In a possible implementation, the sending module is specifically configured to send an RRC reconfiguration message to the terminal device, where the RRC reconfiguration message includes the random access configuration.

According to a twenty-fourth aspect, an embodiment of this application provides a computer-readable storage medium. The storage medium is configured to store a computer program. When the computer program is executed by a computer or a processor, the computer program is used to implement the communication method according to any one of the twenty-first aspect or the possible implementations of the twenty-first aspect.

According to a twenty-fifth aspect, an embodiment of this application provides a communication method, including:

A terminal device receives a random access configuration sent by a first network device, where the random access configuration is allocated by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the terminal device accesses the second network device based on the random access configuration.

In the foregoing process, in a process in which the terminal device is handed over from the first network device to the second network device, the second network device determines the dedicated PRACH configuration for the terminal device, so that the terminal device can access the second network device based on the dedicated PRACH configuration. Because the PRACH configuration is dedicated to the terminal device, a conflict between the terminal device and another terminal device in the handover process is avoided, thereby improving a random access success probability of the terminal device in the handover process, and further improving communication efficiency.

In a possible implementation, the first network device is a first centralized unit CU, and the second network device is a second CU.

In a possible implementation, the first network device is a control plane CU-CP in a third CU, and the second network device is a CU-CP in a fourth CU.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, that a terminal device receives a random access configuration sent by a first network device includes:
The terminal device receives an RRC reconfiguration message, where the RRC reconfiguration message includes the random access configuration.

In the foregoing process, the first network device may send the random access configuration to the terminal device by using an existing message, so that signaling overheads are relatively low.

According to a twenty-sixth aspect, an embodiment of this application provides a communication apparatus, used in a terminal device. The apparatus includes a processor, a receiver, and a memory, where the memory stores program instructions, and the processor executes the program instructions in the memory, where
the receiver is configured to receive a random access configuration sent by a first network device, where the random access configuration is allocated by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the processor is configured to access the second network device based on the random access configuration.

In a possible implementation, the first network device is a first centralized unit CU, and the second network device is a second CU.

In a possible implementation, the first network device is a control plane CU-CP in a third CU, and the second network device is a CU-CP in a fourth CU.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, the receiver is specifically configured to receive an RRC reconfiguration message, where the RRC reconfiguration message includes the random access configuration.

According to a twenty-seventh aspect, an embodiment of this application provides a communication apparatus, used in a terminal device. The apparatus includes a processing module and a receiving module, where
the receiving module is configured to receive a random access configuration sent by a first network device, where the random access configuration is allocated by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the processing module is configured to access the second network device based on the random access configuration.

In a possible implementation, the first network device is a first centralized unit CU, and the second network device is a second CU.

In a possible implementation, the first network device is a control plane CU-CP in a third CU, and the second network device is a CU-CP in a fourth CU.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, the receiving module is specifically configured to receive an RRC reconfiguration message, where the RRC reconfiguration message includes the random access configuration.

According to a twenty-eighth aspect, an embodiment of this application provides a computer-readable storage medium. The storage medium is configured to store a computer program. When the computer program is executed by a computer or a processor, the computer program is used to implement the communication method according to any one of the twenty-fifth aspect or the possible implementations of the twenty-fifth aspect.

According to the communication method, the communication apparatus, and the device provided in the embodiments of this application, after a terminal device accesses a network device through a 2-step RACH, the terminal device sends first information to the network device, where the first information may be information about the two-step random access process of the terminal device, so that the network device can optimize a RACH configuration based on the first information, thereby improving a random access success probability of the terminal device, and further improving communication efficiency.

### BRIEF DESCRIPTION OF DRAWINGS

FIG. 1 is a schematic architectural diagram of a base station in which a CU is separated from a DU in a 5G communication system;
FIG. 2 is an architectural diagram of a system according to an embodiment of this application;
FIG. 3 is a schematic flowchart of a 4-step RACH according to an embodiment of this application;
FIG. 4 is a schematic flowchart of a 2-step RACH according to an embodiment of this application;
FIG. 5 is a schematic flowchart of a communication method according to an embodiment of this application;
FIG. 6 is another schematic flowchart of a communication method according to an embodiment of this application;
FIG. 7 is another schematic flowchart of a communication method according to an embodiment of this application;
FIG. 8 is another schematic flowchart of a communication method according to an embodiment of this application;
FIG. 9 is another schematic flowchart of a communication method according to an embodiment of this application;
FIG. 10 is a schematic structural diagram of a communication apparatus according to an embodiment of this application;
FIG. 11 is another schematic structural diagram of a communication apparatus according to an embodiment of this application;
FIG. 12 is still another schematic structural diagram of a communication apparatus according to an embodiment of this application;
FIG. 13 is another schematic structural diagram of a communication apparatus according to an embodiment of this application;
FIG. 14 is still another schematic structural diagram of a communication apparatus according to an embodiment of this application;
FIG. 15 is another schematic structural diagram of a communication apparatus according to an embodiment of this application;
FIG. 16 is yet another schematic structural diagram of a communication apparatus according to an embodiment of this application;
FIG. 17 is another schematic structural diagram of a communication apparatus according to an embodiment of this application;
FIG. 18 is still another schematic structural diagram of a communication apparatus according to an embodiment of this application;
FIG. 19 is yet another schematic structural diagram of a communication apparatus according to an embodiment of this application;
FIG. 20 is another schematic structural diagram of a communication apparatus according to an embodiment of this application;
FIG. 21 is yet another schematic structural diagram of a communication apparatus according to an embodiment of this application;
FIG. 22 is still another schematic structural diagram of a communication apparatus according to an embodiment of this application;
FIG. 23 is yet another schematic structural diagram of a communication apparatus according to an embodiment of this application;
FIG. 24 is another schematic structural diagram of a communication apparatus according to an embodiment of this application;
FIG. 25 is yet another schematic structural diagram of a communication apparatus according to an embodiment of this application;
FIG. 26 is another schematic structural diagram of a communication apparatus according to an embodiment of this application; and
FIG. 27 is still another schematic structural diagram of a communication apparatus according to an embodiment of this application.

### DESCRIPTION OF EMBODIMENTS

For ease of understanding of this application, a communication system to which this application is applicable and a device in this application are first described.

The technical solutions shown in this application may be applied to a 5th generation mobile communication technology (The 5th generation mobile communication technology, 5G) system, and the 5G system may also be referred to as a 5th generation mobile communication technology new radio (new radio, NR) system. The technical solutions may further be applied to a long term evolution (long term evolution, LTE) system, and may further be applied to a universal mobile telecommunications system (universal mobile telecommunications system, UMTS) terrestrial radio access network (UMTS terrestrial radio access network, UTRAN) system, or a global system for mobile communications (global system for mobile communication, GSM)/enhanced data rates for GSM evolution (enhanced data rate for GSM Evolution, EDGE) system radio access network (GSM EDGE radio access network, GERAN) architecture. The technical solutions shown in this application may further be applied to another communication system, for example, a public land mobile network (public land mobile network, PLMN) system or a communication system after 5G. This is not limited in this application.

This application relates to a terminal device. The terminal device may be a device that includes wireless transmission and reception functions and that may cooperate with a network device to provide a communication service for a user. The terminal device may be an industrial robot, an industrial automation device, a terminal device, user equipment (user equipment, UE), an access terminal, a subscriber unit, a subscriber station, a mobile station, a mobile station, a remote station, a remote terminal, a mobile device, a user terminal, a terminal, a wireless terminal device, a user agent, or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network or a network after 5G, for example, a V2X terminal device in an LTE network, or a V2X terminal device in a 5G network. This is not limited in this application.

This application further relates to a network device, and the network device may be a device configured to communicate with a terminal device. The network device may be a next generation NodeB (next generation NodeB, gNB) or a next generation-evolved NodeB (next generation-evolved NodeB, ng-eNB). The gNB provides a user plane function and a control plane function of new radio (new radio, NR) for UE, and the ng-eNB provides a user plane function and a control plane function of evolved universal terrestrial radio access (evolved universal terrestrial radio access, E-UTRA) for UE. It should be noted that the gNB and the ng-eNB are merely names and used to indicate a base station supporting a 5G network system, and have no limited meaning. Alternatively, the network device may be a base transceiver station (base transceiver station, BTS) in a GSM system or a CDMA system, or may be a NodeB (nodeB, NB) in a WCDMA system, or may be an evolved NodeB (evolutional node B, eNB or eNodeB) in an LTE system. Alternatively, the network device may be a relay station, an access point, a vehicle-mounted device, a wearable device, a network side device in a network after 5G, a network device in a future evolved PLMN network, a road site unit (road site unit, RSU), or the like.

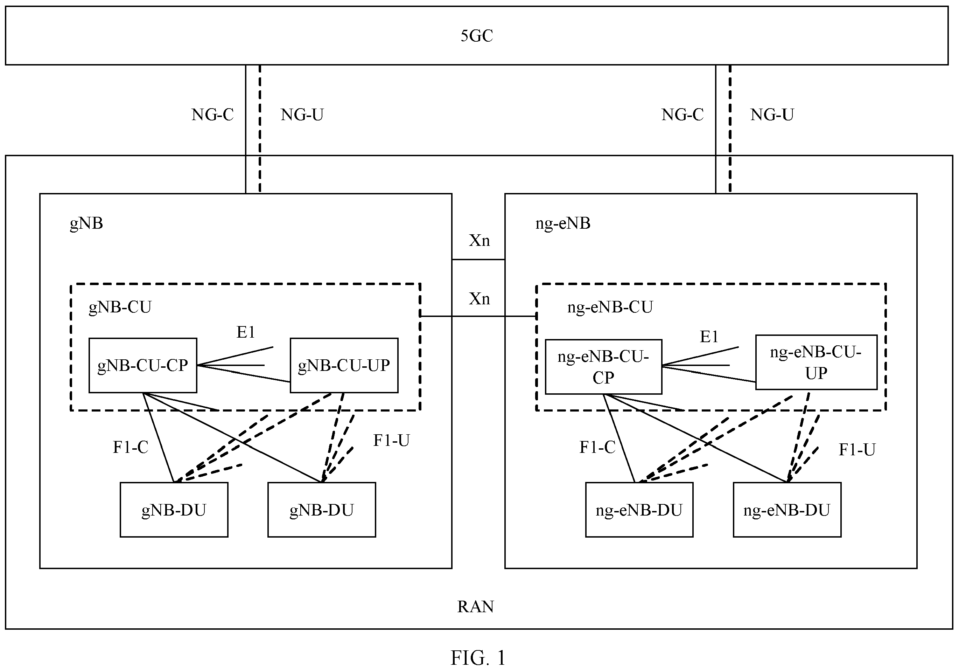

FIG. 1 is a schematic architectural diagram of a base station in which a CU is separated from a DU in a 5G communication system. As shown in FIG. 1, the 5G communication system includes a next generation core (next generation core, 5GC) and a radio access network (radio access network, RAN) node connected to the 5GC. The RAN node may be a gNB or an ng-eNB. The RAN node may be connected to the 5GC through a next generation control (NG-C) interface and a next generation user (NG-U) interface. For ease of description, FIG. 1 shows only one gNB and one ng-eNB.

Optionally, gNBs, a gNB and an ng-eNB, or ng-eNBs may be connected through an Xn interface. One gNB or ng-eNB may include one centralized unit (central unit, CU) and one or more distributed units (distributed unit, DU). For example, the gNB or ng-eNB shown in FIG. 1 includes one CU and two DUs. Further, one CU may include one centralized unit-control plane (CU-control plane function, CU-CP) and one or more centralized unit-user planes (CU-user plane function, CU-UP). The CU and the DU may be connected through an F1 interface, the CU-CP and the CU-UP may be connected through an E1 interface, the CU-CP and the DU may be connected through an F1-control plane (F1-C) interface, and the CU-UP and the DU may be connected through an F1-user plane (F1-U) interface.

As shown in FIG. 1, a solid line represents control plane transmission, and a dashed line represents user plane transmission. Functions of the CU and the DU may be divided based on a protocol stack. In a possible manner, a radio resource control (radio resource control, RRC) layer, a packet data convergence protocol (packet data convergence protocol, PDCP) layer, and a service data adaptation (service data adaptation, SDAP) layer are deployed on the CU. A radio link layer control (radio Link control, RLC) protocol, media access control (media access control, MAC), and physical layer (physical layer, PHY) are deployed on the DU. Correspondingly, the CU has processing capabilities of the RRC, the PDCP, and the SDAP, and the DU has processing capabilities of the RLC, the MAC, and the PHY. It should be noted that the foregoing function division is only an example, and there may alternatively be another division manner. For example, the CU includes processing capabilities of the RRC, the PDCP, the RLC, and the SDAP, and the DU has processing capabilities of the MAC and the PHY. For another example, the CU includes processing capabilities of the RRC, the PDCP, the RLC, the SDAP, and a part of the MAC layer (for example, adding a MAC header), and the DU has processing capabilities of the PHY and a part of the MAC (for example, scheduling). Names of the CU and the DU may change, and any access network node that can implement the foregoing functions may be considered as the CU and the DU in this application. The CU-CP has a control plane function of the CU, for example, the processing capability of the RRC and a control plane processing capability of the PDCP. The CU-UP has a user plane function of the CU, for example, the processing capability of the SDAP and a user plane processing capability of the PDCP.

It should be noted that when an architecture of a base station is shown in FIG. 1, a network device may be a CU, a CU-CP, a CU-UP, or a DU. A terminal device is connected to the CU through the DU, and is connected to a 5GC through the CU. In addition, the terminal device may alternatively be connected to the CU-CP through the DU and be connected to a control plane of the 5GC through the CU-CP. The terminal device is connected to the CU-UP through the DU, and is connected to a user plane of the 5GC through the CU-UP.

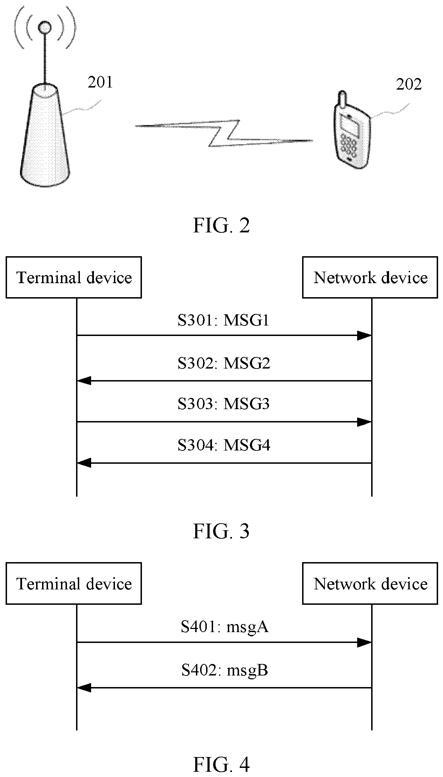

FIG. 2 is an architectural diagram of a system according to an embodiment of this application. Referring to FIG. 2, the system includes a network device 201 and a terminal device 202. The network device 201 may generate a random access channel (random access channel, RACH) configuration (which may also be referred to as a random access configuration), and the terminal device 202 may access the network device 201 in a random access process based on the RACH configuration generated by the network device 201. The terminal device 202 may generate information about the random access process, and send the information about the random access process to the network device 201, so that the network device 201 can optimize the RACH configuration based on the information about the random access process, thereby improving a random access success probability of the terminal device, and improving communication efficiency.

In an actual application process, the terminal device may initiate random access in a plurality of possible scenarios. For example, the plurality of possible scenarios may include at least one of the following scenarios: (1) After a state of the terminal device is changed from a radio resource control (radio resource control, RRC) idle state to an RRC connected state, the terminal device initiates random access in a process of setting up a radio link to the network device. (2) After a radio link between the terminal device and the network device fails, the terminal device immediately initiates random access when re-establishing an RRC connection to the network device. (3) The terminal device initiates random access when the terminal device needs to set up uplink synchronization with a new cell. (4) When the terminal device is in an RRC connected state and an uplink is not synchronized, if uplink or downlink data arrives, the terminal device initiates random access. (5) When the terminal device is in an RRC connected state, but a dedicated resource for sending a scheduling request has not been configured for the terminal device on a physical uplink control channel (physical uplink control channel, PUCCH), the terminal device initiates random access. (6) The terminal device initiates random access when a scheduling request fails. (7) The terminal device initiates random access for an RRC request during synchronous reconfiguration. (8) The terminal device initiates random access when a state of the terminal device switches from an RRC inactive state to an RRC connected state. (9) The terminal device initiates random access during time alignment establishment when a second cell is added. (10) The terminal device initiates random access when system information other than a master information block (master information block, MIB) and a system information block (system information block, SIB) is requested. (11) The terminal device initiates random access during beam failure recovery.

The random access in this application may include four-step random access (or referred to as a four-step random access channel, and referred to as a 4-step RACH for short below) and two-step random access (or referred to as a two-step random access channel, and referred to as a 2-step RACH for short below). For ease of understanding, the following separately describes in detail a 4-step RACH process and a 2-step RACH process.

FIG. 3 is a schematic flowchart of a 4-step RACH according to an embodiment of this application. The 4-step RACH is defined in detail in the existing protocol TS38.300, and is merely briefly described in this application. Referring to FIG. 3, the method may include the following steps.

S301: A terminal device sends an MSG1 (or referred to as an Msg1 or an msg1) to a network device, to transmit a random access preamble (or referred to as a random access preamble or a random access preamble sequence, and referred to as a preamble or a preamble sequence for short below).

In this embodiment of this application, a preamble and a time-frequency resource occupied for sending the preamble are referred to as physical random access channel (physical random access channel, PRACH) resources.

Optionally, the network device may broadcast an available PRACH resource, and the terminal device may select a preamble, and send the preamble on a corresponding time-frequency resource. For example, the network device may broadcast the available PRACH resource by using system information.

S302: The network device sends an MSG2 (or referred to as an Msg2 or an msg2) to the terminal device.

The MSG2 includes a time-frequency resource that is determined by the network device and that is used by the terminal device to send a payload (payload).

S303: The terminal device sends an MSG3 (or referred to as an Msg3 or an msg3) to the network device.

The MSG3 is the first scheduled transmission in the random access process and is used to send a payload (payload), for example, an RRC connection request message or a tracking area update message.

It should be noted that if different terminal devices select a same preamble in S301 and send the preamble on a same time-frequency resource, the different terminal devices send payloads on the same time-frequency resource. As a result, a resource use conflict is caused.

S304: The network device sends an MSG4 (or referred to as an Msg4 or an msg4) to the terminal device, to indicate whether the terminal device successfully accesses the network device.

On the 4-step RACH shown in FIG. 3, the terminal device and the network device need to perform four signaling exchanges, signaling overheads are high, and a communication latency is relatively high.

FIG. 4 is a schematic flowchart of a 2-step RACH according to an embodiment of this application. Referring to FIG. 4, the method may include the following steps.

S401: A terminal device sends an msgA (or referred to as an MsgA or an MSGA) to a network device.

The msgA includes a preamble and a payload (for example, an RRC connection request message or a tracking area update message).

S402: The network device sends an msgB (or referred to as an MsgB or an MSGB) to the terminal device, to indicate whether the terminal device successfully accesses the network device.

On the 2-step RACH shown in FIG. 4, the terminal device and the network device need to perform two signaling exchanges. Compared with a 4-step RACH, signaling overheads are reduced and a communication latency is reduced.

The following describes the technical solutions of this application in detail with reference to specific embodiments. It should be noted that the following several embodiments may be independent or may be combined with each other, and same or similar content is not described repeatedly in different embodiments.

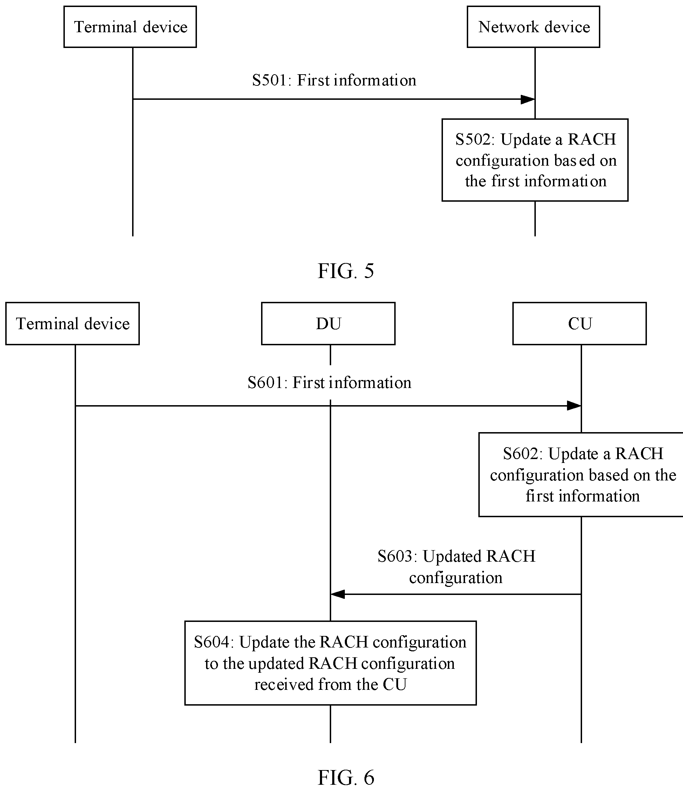

FIG. 5 is a schematic flowchart of a communication method according to an embodiment of this application. Referring to FIG. 5, the method may include the following steps.

S501: A terminal device sends first information to a network device.

The first information may be random access failure information reported by the terminal device to the network device when the terminal device performs random access.

Optionally, the network device may be a base station.

Optionally, after successfully accessing the network device through a 2-step RACH, the terminal device may send the first information to the network device. That the terminal device accesses the network device through the 2-step RACH means that the terminal device accesses the network device by using the method shown in the embodiment in FIG. 4.

Optionally, the first information may be information about the two-step random access process of the terminal device.

Optionally, the first information may be information indicating that the terminal device fails to access the network device through the 2-step RACH. A failure may occur in the process in which the terminal device accesses the network device through the 2-step RACH. For example, the terminal device performs a plurality of random access attempts before successfully accessing the network device.

Optionally, the first information may include at least one of the following information: a quantity of preambles (or msgAs) sent by the terminal device on the 2-step RACH; indication information used to indicate whether contention of at least one preamble is detected in the sent preamble; and indication information used to indicate whether contention of at least one time-frequency resource is detected in a time-frequency resource used for a sent payload.

Certainly, the first information may further include other content. This is not specifically limited in this embodiment of this application.

It should be noted that, when a RACH configuration shown in this application is a RACH configuration corresponding to a synchronization signal and physical broadcast channel block (synchronization signal and physical broadcast channel block, SSB), the first information may alternatively be information about a four-step random access process of the terminal device. Correspondingly, the first information may further include a quantity of preambles sent by the terminal device on the 4-step RACH, and/or indication information used to indicate whether contention of at least one preamble is detected in the sent preamble.

A concept of the SSB is introduced in a fifth generation communication system. Specifically, the SSB includes a primary synchronization signal (primary synchronization signal, PSS), a secondary synchronization signal (secondary synchronization signal, SSS), and a physical broadcast channel (physical broadcast channel, PBCH), and occupies four symbols in time domain and 240 subcarriers in frequency domain. Within a frequency range of one carrier, a plurality of SSBs may be transmitted. Each SSB corresponds to one physical cell identifier (physical cell identifier, PCI), and the PCIs corresponding to the SSBs may be the same or may be different. A terminal may obtain the PCI and uplink synchronization by using the PSS. The terminal may obtain a cyclic prefix (cyclic prefix, CP) length, a physical cell group identifier (ID), and frame synchronization by using the SSS. The terminal can obtain an MIB by decoding the PBCH. The MIB includes a quantity of common antenna ports, a system frame number (system frame number, SFN), a downlink system bandwidth, and physical hybrid automatic repeat request indication information (physical hybrid automatic repeat request indicator channel, PHICH) configuration information.

Specifically, when one SSB is associated with remaining minimum system information (remaining minimum system information, RMSI), the SSB corresponds to an independent cell, and the cell has a unique NR cell global identifier (NR cell global identifier, NCGI). In this case, such an SSB is referred to as a cell defining SSB (cell defining SSB, CD-SSB). Only the CD-SSB can be used to send an MIB message and a system information block1 (system information block1, SIB1) message. In addition, when performing cell selection, the terminal performs access based on only a synchronization signal of the CD-SSB. Another SSB can be used to send only an MIB message and cannot be used to send a SIB1 message.

It should be understood that a type of the SSB is not limited in this application, and types of the SSB include the foregoing CD-SSB and an SSB other than the CD-SSB.

It should be further understood that a basic concept of the SSB is already defined in detail in the existing protocol TS38.300. This application merely briefly describes the SSB. The foregoing descriptions of the SSB cannot limit the protection scope of this application, but are merely intended to enhance understanding of the embodiments of this application.

S502: The network device updates the RACH configuration based on the first information.

Optionally, the RACH configuration is a RACH configuration corresponding to a cell in which the terminal device is located, or the RACH configuration is a RACH configuration corresponding to an SSB used when the terminal device performs random access.

For example, the network device may correspond to a plurality of cells, and each cell has a corresponding RACH configuration. Correspondingly, after the network device receives the first information sent by the terminal device, the network device determines the cell in which the terminal device is located, and updates the RACH configuration corresponding to the cell in which the terminal device is located.

For example, the network device may correspond to a plurality of SSBs, and each SSB has a corresponding RACH configuration. Correspondingly, after the network device receives the first information sent by the terminal device, the network device may determine the SSB used when the terminal device performs random access, and update the RACH configuration corresponding to the SSB.

Optionally, the RACH configuration includes at least one of the following: a PRACH configuration (PRACH configuration) of the preamble on the 2-step RACH, a time-frequency resource configuration of the payload on the 2-step RACH, indication information used to indicate whether backoff from the 2-step RACH to the 4-step RACH can be performed, a PRACH configuration (PRACH configuration) of the preamble on the 4-step RACH, 4-step RACH preamble split (RACH preamble split), 2-step RACH preamble split (RACH preamble split), a 4-step RACH backoff parameter value (RACH backoff parameter value), a 2-step RACH backoff parameter value (RACH backoff parameter value), a 4-step RACH transmission power control parameter (RACH transmission power control parameters), and a 2-step RACH transmission power control parameter (RACH transmission power control parameters).

The PRACH configuration may include a root sequence index, a zero correlation zone configuration, a PRACH frequency offset, a PRACH configuration index, and the like. The PRACH configuration of the preamble on the 2-step RACH may be used to adjust the preamble on the 2-step RACH and/or a time-frequency resource used for transmitting the preamble. The PRACH configuration of the preamble on the 4-step RACH may be used to adjust the preamble on the 4-step RACH and/or a time-frequency resource used for transmitting the preamble.

The time-frequency resource configuration of the payload on the 2-step RACH is used to adjust the time-frequency resource used for the payload on the 2-step RACH. Optionally, the time-frequency resource configuration of the payload may be determined by using a frequency offset (frequency offset) or a configuration index (configuration index). The frequency offset is used to indicate an index of the first resource block (resource block, RB) for sending the preamble by the terminal device. The configuration index (PRACH-configuration index) is used to indicate a time-frequency resource and a preamble format for sending the preamble by the terminal device.

The preamble split (the 4-step RACH preamble split or the 2-step RACH preamble split) may be used to adjust a member of each preamble subset. The network device may send each adjusted preamble subset to the terminal device, for example, to the terminal device by using system information. The 2-step RACH preamble split may be used to adjust a member of each preamble subset on the 2-step RACH. The 4-step RACH preamble split may be used to adjust a member of each preamble subset on the 4-step RACH.

The RACH back off parameter value (the 4-step RACH backoff parameter value or the 2-step RACH backoff parameter value) may include a time window. The time window is used to indicate a time period in which the terminal device expects to receive a random access response (including an msgB on the 2-step RACH and an MSG2 on the 4-step RACH). Starting and ending of the time window are set by the network device and broadcast as part of system information. For example, if the terminal device receives no random access response within the specified time window, the terminal device retransmits the msgA or an MSG1. When updating the time window, the network device may adjust a length of the time window based on the first information. For example, the length of the time window may be adjusted to be longer.

The RACH transmission power control parameter (the 4-step RACH transmission power control parameter or the 2-step RACH transmission power control parameter) is used to indicate a power ramping step value when the terminal device retransmits the msgA on the 2-step RACH or the MSG1 on the 4-step RACH. In the random access process, each time random access fails, the terminal device increases, based on the power ramping step value, a transmission power for sending the msgA on the 2-step RACH or the MSG1 on the 4-step RACH next time, to increase a random access success probability next time. When updating the power ramping step value, the network device may adjust the power ramp step value based on the first information, for example, may increase the power ramp step value.

Optionally, the PRACH configuration (the PRACH configuration of the preamble on the 4-step RACH or the PRACH configuration of the preamble on the 2-step RACH) shown in this embodiment of this application includes at least one of the following:
the root sequence index (root sequence index), where an available preamble set corresponding to a cell or an SSB is generated by performing cyclic shift on one or more root Zadoff-Chu sequences (ZC sequences), and a logical sequence number of a start root sequence used for the cell or the SSB is configured by using the parameter root sequence index; after the value of the root sequence index parameter is determined, the root sequence used for the cell is determined; if values of root sequence index parameters of two cells are different, root sequences used for the two cells are different, and preambles available to the two cells are different; for example, a value of a root sequence index parameter of a cell 1 is 1, and a value of a root sequence index parameter of a cell 2 is 2. In this case, a ZC sequence used to generate a preamble in the cell 1 is a ZC sequence corresponding to a root sequence index parameter whose value is 1 in a root sequence index comparison table, and a ZC sequence used to generate a preamble in the cell 2 is a ZC sequence corresponding to a root sequence index parameter whose value is 2 in a root sequence index comparison table;
the zero correlation zone configuration (zero correlation zone configuration), where this parameter is used to indicate an index value of a cyclic shift configuration used when a PRACH preamble is generated; after a value of the zero correlation zone configuration is determined, a cyclic shift used when the preamble is generated is determined, and then a preamble available to a cell or an SSB is determined; when a same root sequence is used to generate preambles for two cells or SSBs, preambles available to the two cells or SSBs are different if different zero correlation zone configurations are used;
a high speed flag (high speed flag), where this parameter is used to indicate whether a cell is a high speed cell or whether an SSB is a high speed SSB; root sequences used to generate preambles for high-speed cells or SSBs are different from those for non-high-speed cells or SSBs; for example, if a cell 1 or an SSB 1 is a high-speed cell or a high-speed SSB, a cell 2 or the SSB 2 is a non-high-speed cell or a non-high-speed SSB, and root sequences used to generate preambles for the two cells or the SSBs are different, preambles available to the two cells or the SSBs are different;
the frequency offset (PRACH-frequency offset), where this parameter is used to indicate an index of the first resource block (resource block, RB) for sending the preamble by the terminal device; for example, if a frequency offset of a cell 1 or an SSB 1 is 1, and a frequency offset of a cell 2 or an SSB 2 is 2, a start RB that is in the cell 1 or the SSB 1 and that is used to transmit a preamble is an RB 1, and an RB that is in the cell 2 or the SSB 2 and that is used to transmit a preamble is an RB 2; and
the configuration index (PRACH-configuration index), where this parameter is used to indicate a time-frequency resource and a preamble format for sending the preamble by the terminal device; for example, if a configuration index of a cell 1 or an SSB 1 is 1, and a configuration index of a cell 2 or an SSB 2 is 2, a time-frequency resource that is used to transmit a preamble and that is in the cell 1 or the SSB 1 is a time-frequency resource corresponding to a configuration index whose value is 1 in a random access configuration index comparison table, and a time-frequency resource that is used to transmit a preamble and that is in the cell 2 or the SSB 2 is a time-frequency resource corresponding to a configuration index whose value is 2 in the random access configuration index comparison table. When different configuration indexes are used for two cells or SSBs, time-frequency resources used to transmit preambles for the two cells or SSBs are different.

According to the communication method provided in this embodiment of this application, after the terminal device accesses the network device through the 2-step RACH, the terminal device sends the first information to the network device, where the first information may be the information about the two-step random access process of the terminal device, so that the network device can optimize the RACH configuration based on the first information, thereby improving a random access success probability of the terminal device, and further improving communication efficiency.

Based on the embodiment shown in FIG. 5, optionally, the network device includes a centralized unit CU and a distributed unit DU. In this network architecture, the communication method can be implemented by using an embodiment shown in FIG. 6.

FIG. 6 is another schematic flowchart of a communication method according to this embodiment of this application. Referring to FIG. 6, the method may include the following steps.

S601: A terminal device sends first information to a CU.

Optionally, after successfully accessing a DU through a 2-step RACH, the terminal device may send the first information to the CU. That the terminal device accesses the DU through the 2-step RACH means that the terminal device accesses the DU by using the method shown in the embodiment in FIG. 4.

The first information may be information about the two-step random access process of the terminal device.

Optionally, the first information may include at least one of the following information: a quantity of preambles sent by the terminal device on the 2-step RACH; indication information used to indicate whether contention of at least one preamble is detected in the sent preamble; and indication information used to indicate whether contention of at least one time-frequency resource is detected in a time-frequency resource used for a sent payload.

Certainly, the first information may further include other content. This is not specifically limited in this embodiment of this application.

Optionally, when the terminal device sends the first information to the CU, the first information may be forwarded by the DU. For example, the terminal device sends the first information to the DU, and the DU forwards the first information to the CU through an F1 interface.

S602: The CU updates a RACH configuration based on the first information.

The RACH configuration updated by the CU is a RACH configuration currently used by the terminal device.

A RACH configuration of a cell or an SSB supported by the DU is prestored in the DU.

Optionally, a RACH configuration may be prestored in the CU, and the RACH configuration is a RACH configuration of a cell or an SSB supported by one or more DUs connected to the CU.

Optionally, before S602, the CU receives the RACH configuration sent by the DU, where the RACH configuration is the RACH configuration of the cell or the SSB supported by the DU.

Optionally, the RACH configuration is a RACH configuration corresponding to a cell in which the terminal device is located, or the RACH configuration is a RACH configuration corresponding to an SSB used when the terminal device performs random access.

Optionally, the RACH configuration includes at least one of the following: a PRACH configuration of the preamble on the 2-step RACH, a time-frequency resource configuration of the payload on the 2-step RACH, indication information used to indicate whether backoff from the 2-step RACH to a 4-step RACH can be performed, a PRACH configuration of a preamble on the 4-step RACH, 4-step RACH preamble split, 2-step RACH preamble split, a 4-step RACH backoff parameter value, a 2-step RACH backoff parameter value, a 4-step RACH transmission power control parameter, and a 2-step RACH transmission power control parameter. It should be noted that, for descriptions of the parameters included in the RACH configuration, refer to S502. Details are not described herein again.

S603: The CU sends an updated RACH configuration to the DU.

For example, the CU may send the updated RACH configuration to the DU through the F1 interface.

S604: The DU updates the RACH configuration to the updated RACH configuration received from the CU.

In the embodiment shown in FIG. 6, after the terminal device accesses the CU through the 2-step RACH, the terminal device sends the first information to the CU, where the first information may be the information about the two-step random access process of the terminal device, so that the CU can optimize the RACH configuration based on the first information, thereby improving a random access success probability of the terminal device, and further improving communication efficiency.

Based on the embodiment shown in FIG. 6, optionally, in an architecture in which the CU is divided into a CU-CP and a CU-UP, the CU-CP serves as a control plane network element and may optimize the RACH configuration. In this architecture, the communication method can be implemented by using the embodiment shown in FIG. 6, where the CU is replaced with the CU-CP.

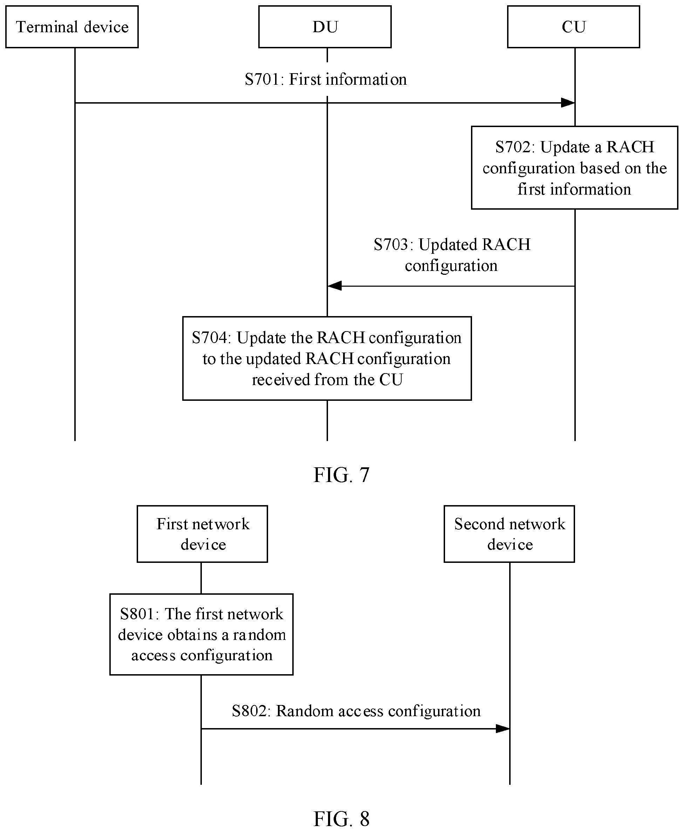

FIG. 7 is another schematic flowchart of a communication method according to an embodiment of this application. Referring to FIG. 7, the method may include the following steps.

S701: A terminal device sends first information to a CU.

Optionally, after successfully accessing a DU through a 4-step RACH, the terminal device may send the first information to the CU. That the terminal device accesses the DU through the 4-step RACH means that the terminal device accesses the DU by using the method shown in the embodiment in FIG. 3.

The first information may be information about the four-step random access process of the terminal device.

Optionally, the first information may include at least one of the following information: a quantity of preambles sent by the terminal device on the 4-step RACH; and indication information used to indicate whether contention of at least one preamble is detected in the sent preamble.

Certainly, the first information may further include other content. This is not specifically limited in this embodiment of this application.

Optionally, in a process in which the terminal device sends the first information to the CU, the first information may be forwarded by the DU. For example, the terminal device sends the first information to the DU, and the DU forwards the first information to the CU through an F1 interface.

S702: The CU updates a RACH configuration based on the first information.

The RACH configuration updated by the CU may be a RACH configuration currently used by the terminal device.

A RACH configuration of a cell or an SSB supported by the DU is prestored in the DU.

Optionally, a RACH configuration may be prestored in the CU, and the RACH configuration is a RACH configuration of a cell or an SSB supported by one or more DUs connected to the CU.

Optionally, before S702, the CU receives the RACH configuration sent by the DU, where the RACH configuration is the RACH configuration of the cell or the SSB supported by the DU.

Optionally, the RACH configuration is a RACH configuration corresponding to a cell in which the terminal device is located, or the RACH configuration is a RACH configuration corresponding to an SSB used when the terminal device performs random access.

Optionally, the RACH configuration includes at least one of the following: a PRACH configuration of the preamble on the 4-step RACH, 4-step RACH preamble split, a 4-step RACH backoff parameter value, and a 4-step RACH transmission power control parameter.

It should be noted that for descriptions of the PRACH configuration of the preamble on the 4-step RACH, the 4-step RACH preamble split, the 4-step RACH backoff parameter value, and the 4-step RACH transmission power control parameter, refer to S502. Details are not described herein again.

S703: The CU sends an updated RACH configuration to the DU.

For example, the CU may send the updated RACH configuration to the DU through the F1 interface.

S704: The DU updates the RACH configuration to the updated RACH configuration received from the CU.

In the embodiment shown in FIG. 7, after the terminal device accesses the DU through the 4-step RACH, the terminal device sends the first information to the CU, where the first information may be the information about the four-step random access process of the terminal device, so that the CU can optimize the RACH configuration based on the first information, thereby improving a random access success probability of the terminal device, and further improving communication efficiency.

Based on the embodiment shown in FIG. 7, optionally, in an architecture in which the CU is divided into a CU-CP and a CU-UP, the CU-CP serves as a control plane network element and is responsible for optimizing the RACH configuration. In this architecture, the communication method can be implemented by using the embodiment shown in FIG. 7, where the CU is replaced with the CU-CP.

FIG. 8 is another schematic flowchart of a communication method according to an embodiment of this application. Referring to FIG. 8, the method may include the following steps.

S801: A first network device obtains a random access configuration.

The random access configuration includes a PRACH configuration and/or a time-frequency resource configuration.

When the first network device is a gNB or an ng-eNB, the random access configuration includes at least one of the following: a random access configuration of two-step random access, and a random access configuration corresponding to a synchronization signal and physical broadcast channel block SSB of four-step random access. The PRACH configuration and/or the time-frequency resource configuration obtained by the first network device are/is used to indicate a configuration of a random access resource used by a terminal device to access the first network device in a random access process. The PRACH configuration includes at least one of the following: a PRACH configuration of a preamble corresponding to a cell on the 2-step RACH, a PRACH configuration of a preamble corresponding to an SSB on the 2-step RACH, and a PRACH configuration of a preamble corresponding to an SSB on the 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

When the first network device is a CU, the random access configuration includes at least one of the following: a random access configuration of two-step random access and a random access configuration of four-step random access. The PRACH configuration and/or the time-frequency resource configuration obtained by the first network device are/is used to indicate a configuration of a random access resource used by a terminal device to access a DU connected to the CU in a random access process. The PRACH configuration includes at least one of the following: a PRACH configuration of a preamble corresponding to a cell on the 2-step RACH, a PRACH configuration of a preamble corresponding to an SSB on the 2-step RACH, a PRACH configuration of a preamble corresponding to a cell on the 4-step RACH, and a PRACH configuration of a preamble corresponding to an SSB on the 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

When the first network device is a CU-CP, the random access configuration includes at least one of the following: a random access configuration of two-step random access and a random access configuration of four-step random access. The PRACH configuration and/or the time-frequency resource configuration obtained by the first network device are/is used to indicate a configuration of a random access resource used by a terminal device to access a DU connected to the CU-CP in a random access process. The PRACH configuration includes at least one of the following: a PRACH configuration of a preamble corresponding to a cell on the 2-step RACH, a PRACH configuration of a preamble corresponding to an SSB on the 2-step RACH, a PRACH configuration of a preamble corresponding to a cell on the 4-step RACH, and a PRACH configuration of a preamble corresponding to an SSB on the 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

It should be noted that, for descriptions of the PRACH configuration and the time-frequency resource configuration, refer to S502. Details are not described herein again.

S802: The first network device sends the random access configuration to a second network device.

Optionally, the first network device may send a first message to the second network device, where the first message includes the PRACH configuration and/or the time-frequency resource configuration.

The first message may be an interface setup request message. For example, in an LTE system, the interface setup request message may be an X2 setup request (X2 setup request) message. In a 5G system, the interface setup request message may be an Xn setup request (Xn setup request) message. In an architecture of a base station in which a CU is separated from a DU, the interface setup request message may be an F1 setup request (F1 setup request) message.

The first message may be an interface setup response message. For example, in the LTE system, the interface setup response message may be an X2 setup response (X2 setup response) message. In the 5G system, the interface setup response message may be an Xn setup response (Xn setup response) message. In the architecture of the base station in which the CU is separated from the DU, the interface setup response message may be an F1 setup response (F1 setup response) message.

The first message may be a node configuration update message. For example, in the 5G system, the node configuration update message may be a next generation radio access network (next generation radio access network, NG-RAN) node configuration update (NG-RAN node configuration update) message. In the architecture of the base station in which the CU is separated from the DU, the node configuration update message may be a centralized unit configuration update (gNB-CU configuration update) message.

The first message may be a node configuration update acknowledge message. For example, in the 5G system, the node configuration update acknowledge message may be a next generation radio access network node configuration update acknowledge (NG-RAN node configuration update acknowledge) message. In the architecture of the base station in which the CU is separated from the DU, the node configuration update acknowledge message may be a distributed unit configuration update acknowledge (gNB-DU configuration acknowledge) message.

It should be noted that when the first message is the node configuration update message or the node configuration update acknowledge message, the first network device sends the configuration update message or the node configuration update acknowledge message to the second network device only after the PRACH configuration and/or the time-frequency resource configuration of the first network device is updated. In addition, the configuration update message or the node configuration update acknowledge message carries the PRACH configuration and/or the time-frequency resource configuration of the first network device. The PRACH configuration and/or the time-frequency resource configuration in the configuration update message or the node configuration update acknowledge message may be an updated complete PRACH configuration and/or time-frequency resource configuration of the first network device; or a PRACH configuration and/or a time-frequency resource configuration in the configuration update message or the node configuration update acknowledge message may be an updated PRACH configuration and/or time-frequency resource configuration of the first network device.

Optionally, after receiving the PRACH configuration and/or the time-frequency resource configuration of the first network device, the second network device may update a PRACH configuration and/or a time-frequency resource configuration of the second network device, or determine a PRACH configuration and/or a time-frequency resource configuration of the second network device.

When the second network device is a gNB or an ng-eNB, the PRACH configuration and/or the time-frequency resource configuration of the second network device are/is used to indicate a configuration of a random access resource used by the terminal device to access the second network device in a random access process. The PRACH configuration includes at least one of the following: a PRACH configuration of a preamble corresponding to a cell on a 2-step RACH, a PRACH configuration of a preamble corresponding to an SSB on the 2-step RACH, and a PRACH configuration of a preamble corresponding to an SSB on a 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

When the second network device is a CU, the PRACH configuration and/or the time-frequency resource configuration of the second network device are/is used to indicate a configuration of a random access resource used by the terminal device to access a DU connected to the CU in a random access process. The PRACH configuration includes at least one of the following: a PRACH configuration of a preamble corresponding to a cell on a 2-step RACH, a PRACH configuration of a preamble corresponding to an SSB on the 2-step RACH, a PRACH configuration of a preamble corresponding to a cell on a 4-step RACH, and a PRACH configuration of a preamble corresponding to an SSB on the 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

When the second network device is a CU-CP, the PRACH configuration and/or the time-frequency resource configuration of the second network device are/is used to indicate a configuration of a random access resource used by the terminal device to access a DU connected to the CU-CP in a random access process. The PRACH configuration includes at least one of the following: a PRACH configuration of a preamble corresponding to a cell on a 2-step RACH, a PRACH configuration of a preamble corresponding to an SSB on the 2-step RACH, a PRACH configuration of a preamble corresponding to a cell on a 4-step RACH, and a PRACH configuration of a preamble corresponding to an SSB on the 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

When the second network device is a DU, the PRACH configuration and/or the time-frequency resource configuration of the second network device are/is used to indicate a configuration of a random access resource used by the terminal device to access the DU in a random access process. The PRACH configuration includes at least one of the following: a PRACH configuration of a preamble corresponding to a cell on a 2-step RACH, a PRACH configuration of a preamble corresponding to an SSB on the 2-step RACH, a PRACH configuration of a preamble corresponding to a cell on a 4-step RACH, and a PRACH configuration of a preamble corresponding to an SSB on the 4-step RACH. The time-frequency resource configuration includes at least one of the following: a time-frequency resource configuration of a payload corresponding to the cell on the 2-step RACH, and a time-frequency resource configuration of a payload corresponding to the SSB on the 2-step RACH.

Optionally, after the second network device receives the PRACH configuration and/or the time-frequency resource configuration of the first network device, the second network device may send the PRACH configuration and/or the time-frequency resource configuration of the second network device to the first network device; or the second network device first updates the PRACH configuration and/or the time-frequency resource configuration of the second network device based on the received PRACH configuration and/or time-frequency resource configuration of the first network device, and then sends an updated PRACH configuration and/or time-frequency resource configuration of the second network device to the first network device.

In the embodiment shown in FIG. 8, after obtaining the PRACH configuration and/or the time-frequency resource configuration, the first network device sends the PRACH configuration and/or the time-frequency resource configuration to the second network device. In this way, the second network device may update the PRACH configuration and/or the time-frequency resource configuration of the second network device based on the PRACH configuration and/or the time-frequency resource configuration of the first network device, to reduce a possibility that the PRACH configuration and/or the time-frequency resource configuration of the first network device conflict/conflicts with the PRACH configuration and/or the time-frequency resource configuration of the second network device, and further reduce a conflict occurrence possibility when the terminal device performs random access based on the PRACH configuration and/or the time-frequency resource configuration, thereby improving a random access success probability of the terminal device, and further improving communication efficiency.

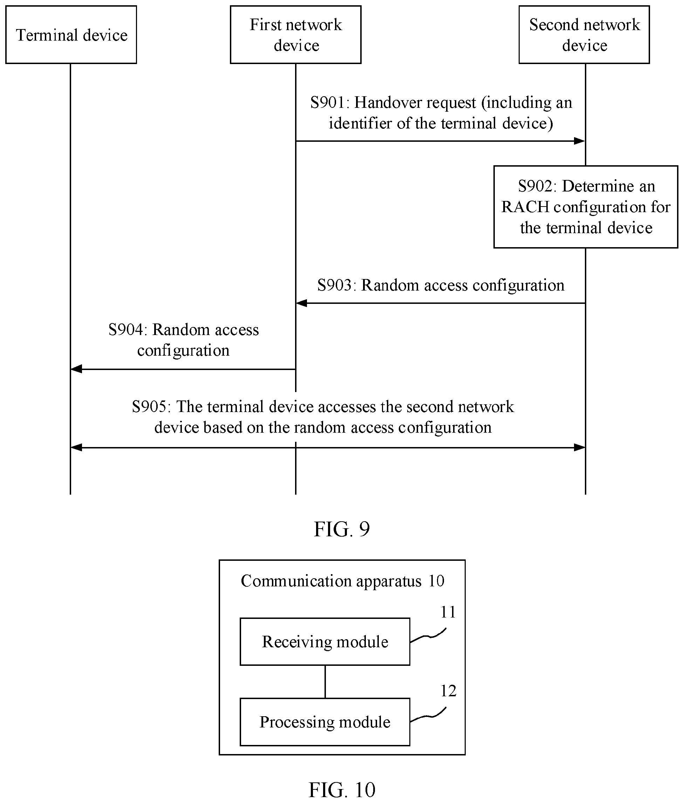

FIG. 9 is another schematic flowchart of a communication method according to an embodiment of this application. Referring to FIG. 9, the method may include the following steps.

S901: A first network device sends a handover request to a second network device.

It should be noted that the embodiment shown in FIG. 9 may be applied to a handover scenario.

When the first network device and the second network device are gNBs or ng-eNBs, the first network device is a gNB or an ng-eNB accessed by a terminal device before the terminal device is handed over, and the second network device is a gNB or an ng-eNB accessed by the terminal device after the terminal device is handed over. The first network device may send a handover request (handover request) message to the second network device, where the message carries an identifier of the terminal device.

When the first network device and the second network device are CUs, the first network device is a CU accessed by a terminal device before the terminal device is handed over, and the second network device is a CU accessed by the terminal device after the terminal device is handed over. The first network device may send a handover request (handover request) message to the second network device, where the message carries an identifier of the terminal device.

When the first network device and the second network device are CU-CPs, the first network device is a CU-CP accessed by a terminal device before the terminal device is handed over, and the second network device is a CU-CP accessed by the terminal device after the terminal device is handed over. The first network device may send a handover request (handover request) message to the second network device, where the message carries an identifier of the terminal device.

When the first network device is a CU and the second network device is a DU connected to the CU, the first network device may send a terminal device context setup request (UE context setup request) message to the second network device, where the message carries an identifier of a terminal device.

When the first network device is a CU-CP and the second network device is a DU connected to the CU-CP, the first network device may send a terminal device context setup request (UE context setup request) message to the second network device, where the message carries an identifier of a terminal device.

S902: The second network device determines a RACH configuration for the terminal device.

When the second network device is the gNB or the ng-eNB, the RACH configuration determined by the second network device for the terminal device is used to indicate a configuration of a random access resource used by the terminal device in a random access process of accessing the second network device. In addition, the RACH configuration is determined by the second network device.

When the second network device is the CU, the RACH configuration determined by the second network device for the terminal device is used to indicate a configuration of a random access resource used by the terminal device to access the DU connected to the CU in a random access process. In addition, the random access configuration is determined by the DU.

When the second network device is the CU-CP, the RACH configuration determined by the second network device for the terminal device is used to indicate a configuration of a random access resource used by the terminal device to access the DU connected to the CU-CP in a random access process. In addition, the random access configuration is determined by the DU.

When the second network device is the DU, the RACH configuration determined by the second network device for the terminal device is used to indicate a configuration of a random access resource used by the terminal device to access the DU in a random access process. In addition, the random access configuration is determined by the DU.

The RACH configuration includes at least one of the following: a preamble index value and a physical random access channel PRACH mask index value on a 2-step RACH, and a preamble index value and a physical random access channel PRACH mask index value on a 4-step RACH. The preamble index value is used to indicate a preamble used by the terminal device in the random access process. The PRACH mask index value is used to indicate a time-frequency resource used by the terminal device to transmit a preamble on the 2-step RACH, a time-frequency resource used to transmit a payload on the 2-step RACH, or a time-frequency resource used to transmit a preamble on the 4-step RACH.

S903: The second network device sends the random access configuration to the first network device.

When the first network device and the second network device are the gNBs or ng-eNBs, the second network device may send a handover request acknowledge (handover request acknowledge) message to the first network device, and include the RACH configuration in the handover request acknowledge message.

When the first network device and the second network device are the CUs, the second network device may send a handover request acknowledge (handover request acknowledge) message to the first network device, and include the RACH configuration in the handover request acknowledge message.

When the first network device and the second network device are the CU-CPs, the second network device may send a handover request acknowledge (handover request acknowledge) message to the first network device, and include the RACH configuration in the handover request acknowledge message.

When the first network device is the CU and the second network device is the DU connected to the CU, the second network device may send a terminal device context setup response (UE context setup response) message to the first network device, and include the RACH configuration in the terminal device context setup response message.

When the first network device is the CU-CP and the second network device is the DU connected to the CU-CP, the second network device may send a terminal device context setup response (UE context setup response) message to the first network device, and include the RACH configuration in the terminal device context setup response message.

S904: The first network device sends the RACH configuration to the terminal device.

The first network device may send an RRC reconfiguration (RRC reconfiguration) message to the terminal device, and include the RACH configuration in the RRC reconfiguration message.

S905: The terminal device accesses the second network device based on the random access configuration.

When the second network device is the gNB or ng-eNB, that the terminal device accesses the second network device based on the RACH configuration means that the terminal device accesses the second network device by using the random access resource determined by the second network device for the terminal device.

When the second network device is the CU, that the terminal device accesses the second network device based on the RACH configuration means that the terminal device accesses the DU by using the random access resource determined by the DU connected to the CU for the terminal device.

When the second network device is the CU-CP, that the terminal device accesses the second network device based on the RACH configuration means that the terminal device accesses the DU by using the random access resource determined by the DU connected to the CU-CP for the terminal device.

When the second network device is the DU, that the terminal device accesses the second network device based on the RACH configuration means that the terminal device accesses the DU by using the random access resource determined by the DU for the terminal device.

Optionally, the terminal device performs the random access process based on the RACH configuration, to access the second network device.

In the embodiment shown in FIG. 9, in the process in which the terminal device is handed over from the first network device to the second network device, the second network device determines the dedicated RACH configuration for the terminal device, so that the terminal device can access the second network device based on the dedicated RACH configuration. Because the RACH configuration is dedicated to the terminal device, a conflict between the terminal device and another terminal device in the handover process is avoided, thereby improving a random access success probability of the terminal device in the handover process, and further improving communication efficiency.

FIG. 10 is a schematic structural diagram of a communication apparatus according to an embodiment of this application. The communication apparatus 10 may be used in a network device. Referring to FIG. 10, the communication apparatus 10 may include a receiving module 11 and a processing module 12, where
the receiving module 11 is configured to receive first information sent by a terminal device, where the first information is information about a two-step random access process of the terminal device; and
the processing module 12 is configured to update a random access configuration based on the first information.

Optionally, the receiving module 11 may perform S501 in the embodiment in FIG. 5 and S601 in the embodiment in FIG. 6.

Optionally, the processing module 12 may perform S502 in the embodiment in FIG. 5 and S602 in the embodiment in FIG. 6.

The communication apparatus provided in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, the random access configuration is a random access configuration corresponding to a cell in which the terminal device is located; or
the random access configuration is a random access configuration corresponding to a synchronization signal and physical broadcast channel block SSB used when the terminal device performs random access.

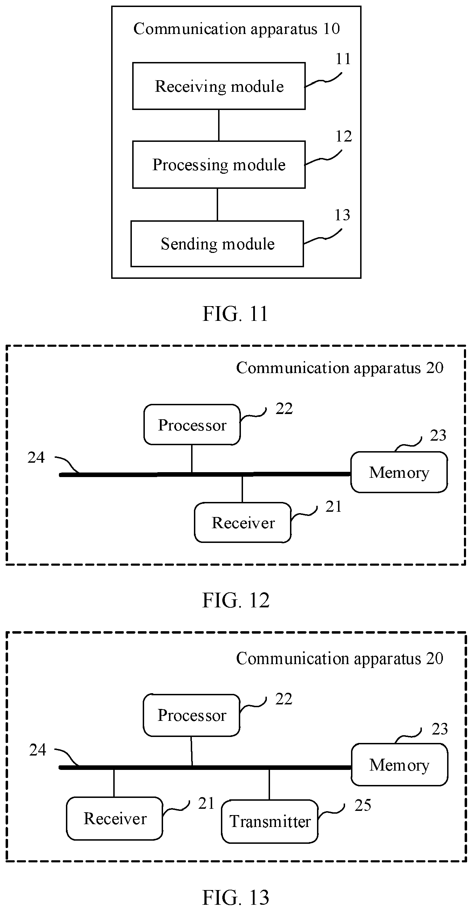

FIG. 11 is another schematic structural diagram of a communication apparatus according to an embodiment of this application. Based on the embodiment shown in FIG. 10, referring to FIG. 11, the apparatus further includes a sending module 13, where
the sending module 13 is configured to send an updated random access configuration to a DU, where the network device includes a centralized unit CU and the distributed unit DU, and the CU is connected to the DU.

In a possible implementation, the receiving module 11 is further configured to: before the processing module 12 updates the random access configuration based on the first information, receive the random access configuration sent by the DU.

In a possible implementation, the network device includes a CU and a DU, and the CU includes a centralized unit-control plane CU-CP and a centralized unit-user plane CU-UP; and
a sending module 13 is further configured to send an updated random access configuration to the DU.

In a possible implementation, the receiving module 11 is further configured to: before the processing module updates the random access configuration based on the first information, receive the random access configuration sent by the DU.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

The communication apparatus provided in this embodiment of this application can perform the technical solution shown in the foregoing method embodiment. An implementation principle and a beneficial effect of the communication apparatus are similar to those of the foregoing method embodiment, and details are not described herein again.

FIG. 12 is still another schematic structural diagram of a communication apparatus according to an embodiment of this application. The communication apparatus 20 may be used in a network device. Referring to FIG. 12, the communication apparatus 20 includes a receiver 21, a processor 22, and a memory 23. The memory 23 stores program instructions, and the processor 22 executes the program instructions in the memory 23. For example, the receiver 21, the processor 22, and the memory 23 may communicate with each other through a communication bus 24, where
the receiver 21 is configured to receive first information sent by a terminal device, where the first information is information about a two-step random access process of the terminal device; and
the processor 22 is configured to update a random access configuration based on the first information.

Optionally, the receiver 21 may have a function of the receiving module 11 shown in the embodiment in FIG. 10, and the processor 22 may have a function of the processing module 12 shown in the embodiment in FIG. 10.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, the random access configuration is a random access configuration corresponding to a cell in which the terminal device is located; or
the random access configuration is a random access configuration corresponding to a synchronization signal and physical broadcast channel block SSB used when the terminal device performs random access.

FIG. 13 is another schematic structural diagram of a communication apparatus according to an embodiment of this application. Based on the embodiment shown in FIG. 12, referring to FIG. 13, the communication apparatus 20 may further include a transmitter 25, where
the transmitter 25 is configured to send an updated random access configuration to a DU, where the network device includes a centralized unit CU and the distributed unit DU, and the CU is connected to the DU.

In a possible implementation, the receiver 21 is further configured to: before the processor 22 updates the random access configuration based on the first information, receive the random access configuration sent by the DU.

In a possible implementation, the network device includes a CU and a DU, and the CU includes a centralized unit-control plane CU-CP and a centralized unit-user plane CU-UP; and
a transmitter 25 is further configured to send an updated random access configuration to the DU.

In a possible implementation, the receiver 21 is further configured to: before the processor updates the random access configuration based on the first information, receive the random access configuration sent by the DU.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

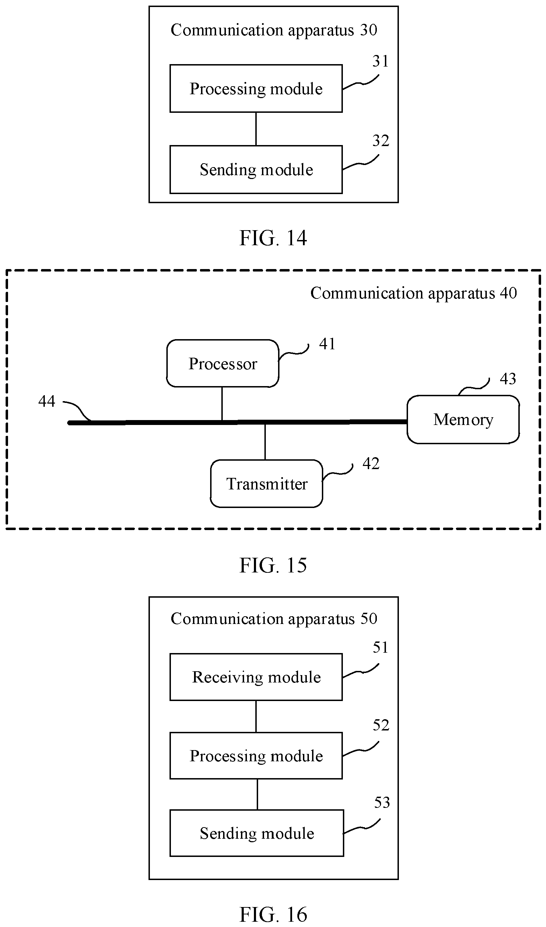

FIG. 14 is still another schematic structural diagram of a communication apparatus according to an embodiment of this application. The communication apparatus 30 may be used in a terminal device. Referring to FIG. 14, the communication apparatus 30 includes a processing module 31 and a sending module 32, where
the processing module 31 is configured to obtain first information, where the first information is information about a two-step random access process of the terminal device; and
the sending module 32 is configured to send the first information to a network device.

Optionally, the sending module 32 may perform S501 in the embodiment in FIG. 5 and S601 in the embodiment in FIG. 6.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, a random access configuration is a random access configuration corresponding to a cell in which the terminal device is located; or
the random access configuration is a random access configuration corresponding to a synchronization signal and physical broadcast channel block SSB used when the terminal device performs random access.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 15 is another schematic structural diagram of a communication apparatus according to an embodiment of this application. The communication apparatus 40 may be used in a terminal device. Referring to FIG. 15, the communication apparatus 40 includes a processor 41, a transmitter 42, and a memory 43. The memory 43 stores program instructions, and the processor 41 executes the program instructions in the memory 43. For example, the processor 41, the transmitter 42, and the memory 43 may communicate with each other through a communication bus 44, where
the processor 41 is configured to obtain first information, where the first information is information about a two-step random access process of the terminal device; and
the transmitter 42 is configured to send the first information to a network device.

Optionally, the processor 41 may have a function of the processing module 31 shown in the embodiment in FIG. 14, and the transmitter 42 may have a function of the sending module 42 shown in the embodiment in FIG. 14.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first information includes at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

In a possible implementation, a random access configuration is a random access configuration corresponding to a cell in which the terminal device is located; or
the random access configuration is a random access configuration corresponding to a synchronization signal and physical broadcast channel block SSB used when the terminal device performs random access.

In a possible implementation, the random access configuration includes at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 16 is yet another schematic structural diagram of a communication apparatus according to an embodiment of this application. The communication apparatus 50 may be used in a centralized unit CU. Referring to FIG. 16, the communication apparatus 50 includes a receiving module 51, a processing module 52, and a sending module 53, where
the receiving module 51 is configured to receive first information sent by a terminal device, where the first information is information about a four-step random access process of the terminal device;
the processing module 52 is configured to update a random access configuration based on the first information; and
the sending module 53 is configured to send an updated random access configuration to a distributed unit DU.

Optionally, the receiving module 51 may perform S701 in the embodiment in FIG. 7.

Optionally, the processing module 52 may perform S702 in the embodiment in FIG. 7.

Optionally, the sending module 53 may perform S703 in the embodiment in FIG. 7.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the receiving module 51 is further configured to: before the processing module 52 updates the random access configuration based on the first information, receive the random access configuration sent by the DU.

In a possible implementation, the CU includes a centralized unit-control plane CU-CP and a centralized unit-user plane CU-UP, and the communication apparatus is used in the CU-CP.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

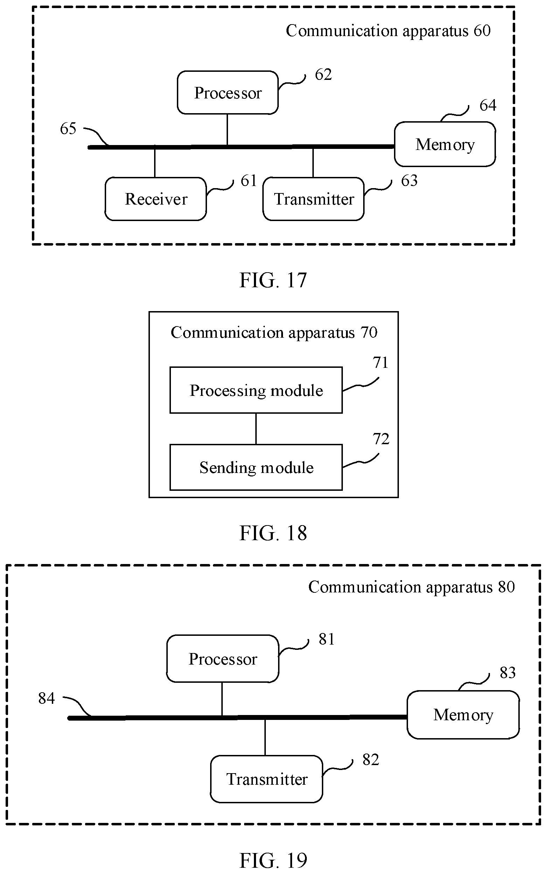

FIG. 17 is another schematic structural diagram of a communication apparatus according to an embodiment of this application. The communication apparatus 60 may be used in a centralized unit CU. Referring to FIG. 17, the communication apparatus 60 includes a receiver 61, a processor 62, a transmitter 63, and a memory 64. The memory 64 stores program instructions, and the processor 62 executes the program instructions in the memory 64. For example, the processor 41, the transmitter 42, and the memory 43 may communicate with each other through a communication bus 65, where
the receiver 61 is configured to receive first information sent by a terminal device, where the first information is information about a four-step random access process of the terminal device;
the processor 62 is configured to update a random access configuration based on the first information; and
the transmitter 63 is configured to send an updated random access configuration to a distributed unit DU.

Optionally, the receiver 61 may have a function of the receiving module 51 shown in the embodiment in FIG. 16, the processor 62 may have a function of the processing module 62 shown in the embodiment in FIG. 16, and the transmitter 62 may have a function of the sending module 63 shown in the embodiment in FIG. 16.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the receiver 61 is further configured to: before the processor 62 updates the random access configuration based on the first information, receive the random access configuration sent by the DU.

In a possible implementation, the CU includes a centralized unit-control plane CU-CP and a centralized unit-user plane CU-UP, and the communication apparatus is used in the CU-CP.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 18 is still another schematic structural diagram of a communication apparatus according to an embodiment of this application. The communication apparatus 70 may be used in a terminal device. Referring to FIG. 18, the communication apparatus 70 includes a processing module 71 and a sending module 72, where
the processing module 71 is configured to obtain first information, where the first information is information about a four-step random access process of the terminal device; and
the sending module 72 is configured to send the first information to a centralized unit CU, where the first information is used to enable the CU to update a random access configuration.

Optionally, the sending module 72 may perform S701 in the embodiment in FIG. 7.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 19 is yet another schematic structural diagram of a communication apparatus according to an embodiment of this application. The communication apparatus 80 may be used in a terminal device. Referring to FIG. 19, the communication apparatus 80 includes a processor 81, a transmitter 82, and a memory 83. The memory 83 stores program instructions, and the processor 81 executes the program instructions in the memory 83. The processor 81, the transmitter 82, and the memory 83 may communicate with each other through a communication bus 84, where
the processor 81 is configured to obtain first information, where the first information is information about a four-step random access process of the terminal device; and
the transmitter 82 is configured to send the first information to a centralized unit CU, where the first information is used to enable the CU to update a random access configuration.

Optionally, the processor 81 has a function of the processing module 71 shown in the embodiment in FIG. 18, and the transmitter 82 has a function of the sending module 72 shown in the embodiment in FIG. 18.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first information includes at least one of the following information:
a quantity of random access preambles sent by the terminal device in the four-step random access process; and
indication information used to indicate whether contention of at least one random access preamble is detected in the sent random access preamble.

In a possible implementation, the random access configuration is configuration information corresponding to a cell in which the terminal device is located; or
the random access configuration is a configuration corresponding to a synchronization signal and physical broadcast channel block SSB used when the terminal device performs random access.

In a possible implementation, the random access configuration includes at least one of the following information: a PRACH configuration of the random access preamble in the four-step random access, random access preamble split in the four-step random access, a random access backoff parameter in the four-step random access, and a random access transmission power control parameter in the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

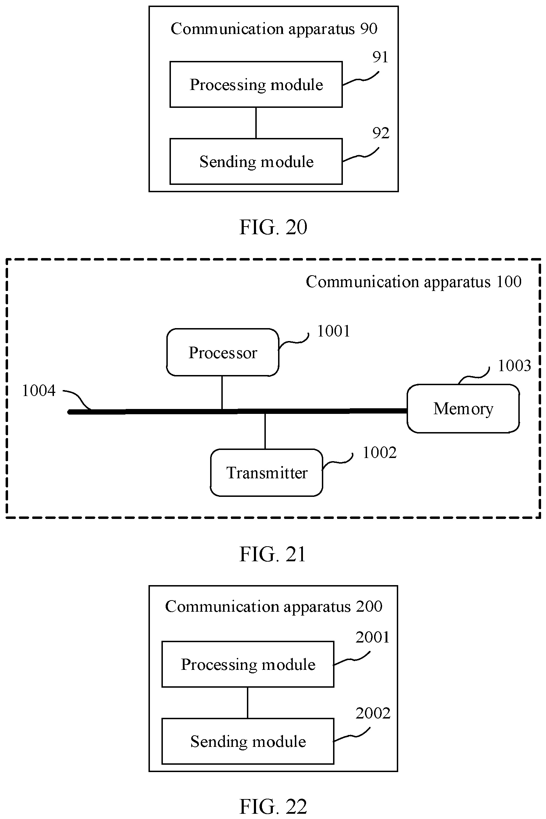

FIG. 20 is another schematic structural diagram of a communication apparatus according to an embodiment of this application. The communication apparatus 90 may be used in a network device. Referring to FIG. 20, the communication apparatus 90 includes a processing module 91 and a sending module 92, where
the processing module 91 is configured to obtain a random access configuration, where the random access configuration includes at least one of the following: a random access configuration of two-step random access, and a random access configuration corresponding to a synchronization signal and physical broadcast channel block SSB of four-step random access; and
the sending module 92 is configured to send the random access configuration to a second network device.

Optionally, the processing module 91 may perform S801 in the embodiment in FIG. 8.

Optionally, the sending module 92 may perform S802 in the embodiment in FIG. 8.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the random access configuration of the two-step random access includes at least one of the following: a physical random access channel PRACH configuration of a random access preamble in the two-step random access, and a time-frequency resource configuration of a payload in the two-step random access.

In a possible implementation, the PRACH configuration is a PRACH configuration corresponding to a cell or a PRACH configuration corresponding to an SSB.

In a possible implementation, the random access configuration corresponding to the SSB of the four-step random access includes a PRACH configuration of a random access preamble corresponding to each SSB of the four-step random access.

In a possible implementation, the sending module 92 is specifically configured to:
send a first message to the second network device, where the first message includes the random access configuration.

In a possible implementation, the first message is an Xn interface setup request message, an X2 interface setup request message, or an F1 setup request message;
the first message is an Xn setup response message, an X2 setup response message, or an F1 setup response message;
the first message is a next-generation radio access network node configuration update message or a centralized unit configuration update message; or
the first message is a next-generation radio access network node configuration update acknowledge message or a distributed unit configuration update acknowledge message.

The first message is a node configuration update acknowledge message.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the first network device is a fifth CU, and the second network device is a DU connected to the fifth CU.

In a possible implementation, the first network device is a CU-CP in a sixth CU, and the second network device is a DU connected to the sixth CU.

In a possible implementation, the random access configuration further includes a random access configuration corresponding to a cell of the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 21 is yet another schematic structural diagram of a communication apparatus according to an embodiment of this application. The communication apparatus 100 may be used in a network device. Referring to FIG. 21, the communication apparatus 100 includes a processor 1001, a transmitter 1002, and a memory 1003. The memory 1003 stores program instructions, and the processor 1001 executes the program instructions in the memory 1003. The processor 1001, the transmitter 1002, and the memory 1003 may communicate with each other through a communication bus 1004, where
the processor 1001 is configured to obtain a random access configuration, where the random access configuration includes at least one of the following: a random access configuration of two-step random access, and a random access configuration corresponding to a synchronization signal and physical broadcast channel block SSB of four-step random access; and
the transmitter 1002 is configured to send the random access configuration to a second network device.

Optionally, the processor 1001 may have a function of the processing module 901 in the embodiment in FIG. 20, and the transmitter 1002 may have a function of the sending module 902 in the embodiment in FIG. 20.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the random access configuration of the two-step random access includes at least one of the following: a physical random access channel PRACH configuration of a random access preamble in the two-step random access, and a time-frequency resource configuration of a payload in the two-step random access.

In a possible implementation, the PRACH configuration is a PRACH configuration corresponding to a cell or a PRACH configuration corresponding to an SSB.

In a possible implementation, the random access configuration corresponding to the SSB of the four-step random access includes a PRACH configuration of a random access preamble corresponding to each SSB of the four-step random access.

In a possible implementation, the transmitter 1002 is specifically configured to:
send a first message to the second network device, where the first message includes the random access configuration.

In a possible implementation, the first message is an Xn setup request message, an X2 setup request message, or an F1 setup request message;
the first message is an Xn setup response message, an X2 setup response message, or an F1 setup response message;
the first message is a next-generation radio access network node configuration update message or a centralized unit configuration update message; or
the first message is a next-generation radio access network node configuration update acknowledge message or a distributed unit configuration update acknowledge message.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

In a possible implementation, the first network device is a fifth CU, and the second network device is a DU connected to the fifth CU.

In a possible implementation, the first network device is a CU-CP in a sixth CU, and the second network device is a DU connected to the sixth CU.

In a possible implementation, the random access configuration further includes a random access configuration corresponding to a cell of the four-step random access.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 22 is still another schematic structural diagram of a communication apparatus according to an embodiment of this application. The communication apparatus 200 may be used in a network device. Referring to FIG. 22, the communication apparatus 200 includes a processing module 2001 and a sending module 2002, where
the processing module 2001 is configured to obtain a random access configuration corresponding to a terminal device, where the random access configuration is determined by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the sending module 2002 is configured to send the random access configuration to the terminal device, where the random access configuration is used to enable the terminal device to access the second network device based on the random access configuration.

Optionally, the processing module 2001 may perform S903 in the embodiment in FIG. 9.

Optionally, the sending module 2002 may perform S901 and S904 in the embodiment in FIG. 9.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

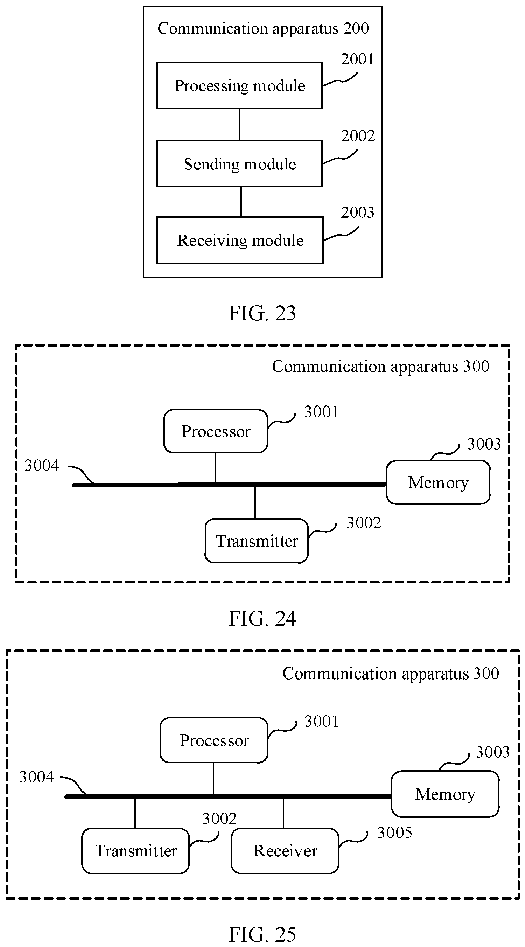

FIG. 23 is yet another schematic structural diagram of a communication apparatus according to an embodiment of this application. Based on the embodiment shown in FIG. 22, referring to FIG. 23, the communication apparatus 200 further includes a receiving module 2003, where
the receiving module 2003 is configured to receive a handover request acknowledge message sent by the second network device, where the handover request acknowledge message includes the random access configuration.

In a possible implementation, the sending module 2002 is further configured to: before the receiving module 2003 receives the handover request acknowledge message sent by the second network device, send a handover request message to the second network device, where the handover request message includes an identifier of the terminal device.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, that the first network device obtains the random access configuration corresponding to the terminal device includes:
the first network device receives a terminal device context setup response message sent by the second network device, where the terminal device context setup response message includes the random access configuration.

In a possible implementation, before the first network device receives the terminal device context setup response message sent by the second network device, the method further includes:
The first network device sends a terminal device context setup request message to the second network device, where the terminal device context setup request message includes an identifier of the terminal device.

In a possible implementation, the sending module 2002 is specifically configured to send an RRC reconfiguration message to the terminal device, where the RRC reconfiguration message includes the random access configuration.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 24 is another schematic structural diagram of a communication apparatus according to an embodiment of this application. The communication apparatus 300 may be used in a network device. Referring to FIG. 24, the communication apparatus 300 includes a processor 3001, a transmitter 3002, and a memory 3003. The memory 3003 stores program instructions, and the processor 3001 executes the program instructions in the memory 3003. The processor 3001, the transmitter 3002, and the memory 3003 may communicate with each other through a communication bus 3004, where
the processor 3001 is configured to obtain a random access configuration corresponding to a terminal device, where the random access configuration is determined by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the transmitter 3002 is configured to send the random access configuration to the terminal device, where the random access configuration is used to enable the terminal device to access the second network device based on the random access configuration.

Optionally, the processor 3001 may have a function of the processing module 2001 in the embodiment in FIG. 22, and the transmitter 3002 may have a function of the sending module 2002 in the embodiment in FIG. 22.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first network device is a first centralized unit CU, and the second network device is a second CU.

In a possible implementation, the first network device is a centralized unit-control plane CU-CP in a third CU, and the second network device is a CU-CP in a fourth CU.

FIG. 25 is yet another schematic structural diagram of a communication apparatus according to an embodiment of this application. Based on the embodiment shown in FIG. 24, referring to FIG. 25, the communication apparatus 300 further includes a receiver 3005, where
the receiver 3005 is configured to receive a handover request acknowledge message sent by the second network device, where the handover request acknowledge message includes the random access configuration.

In a possible implementation, the sending module 3002 is further configured to: before the receiving module 3005 receives the handover request acknowledge message sent by the second network device, send a handover request message to the second network device, where the handover request message includes an identifier of the terminal device.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, that the first network device obtains the random access configuration corresponding to the terminal device includes:
The first network device receives a terminal device context setup response message sent by the second network device, where the terminal device context setup response message includes the random access configuration.

In a possible implementation, before the first network device receives the terminal device context setup response message sent by the second network device, the method further includes:
The first network device sends a terminal device context setup request message to the second network device, where the terminal device context setup request message includes an identifier of the terminal device.

In a possible implementation, the sending module 3002 is specifically configured to send an RRC reconfiguration message to the terminal device, where the RRC reconfiguration message includes the random access configuration.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

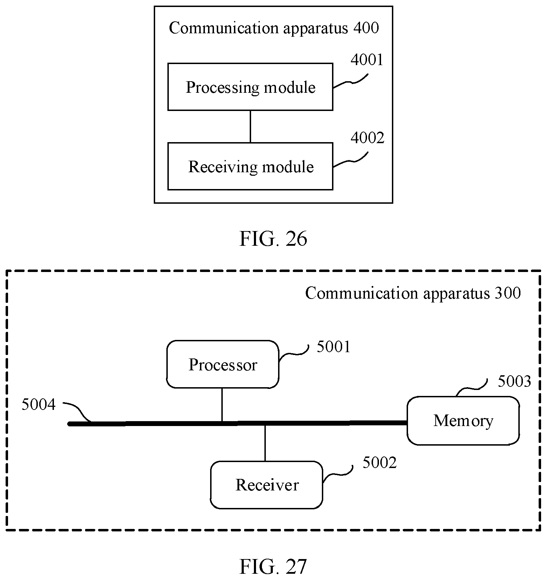

FIG. 26 is another schematic structural diagram of a communication apparatus according to an embodiment of this application. The communication apparatus 400 may be used in a terminal device. Referring to FIG. 26, the communication apparatus 400 includes a processing module 4001 and a receiving module 4002, where
the receiving module 4001 is configured to receive a random access configuration sent by a first network device, where the random access configuration is allocated by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the processing module 4002 is configured to access the second network device based on the random access configuration.

Optionally, the receiving module 4001 may perform S904 in the embodiment in FIG. 9.

Optionally, the processing module 4002 may perform S905 in the embodiment in FIG. 9.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first network device is a first centralized unit CU, and the second network device is a second CU.

In a possible implementation, the first network device is a control plane CU-CP in a third CU, and the second network device is a CU-CP in a fourth CU.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, the receiving module 4001 is specifically configured to receive an RRC reconfiguration message, where the RRC reconfiguration message includes the random access configuration.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

FIG. 27 is still another schematic structural diagram of a communication apparatus according to an embodiment of this application. The communication apparatus 500 may be used in a terminal device. Referring to FIG. 27, the communication apparatus 500 includes a processor 5001, a receiver 5002, and a memory 5003. The memory 5003 stores program instructions, and the processor 5001 executes the program instructions in the memory 5003. For example, the processor 5001, the receiver 5002, and the memory 5003 communicate with each other through a communication bus 5004, where
the receiver 5002 is configured to receive a random access configuration sent by a first network device, where the random access configuration is allocated by a second network device for the terminal device, and the random access configuration includes at least one of the following: a random access preamble index value and a physical random access channel PRACH mask index value in two-step random access, and a random access preamble index value and a physical random access channel PRACH mask index value in four-step random access; and
the processor 5003 is configured to access the second network device based on the random access configuration.

Optionally, the receiver 5001 may have a function of the receiving module 4001 in the embodiment in FIG. 26, and the processor 5003 may have a function of the processing module 4002 in the embodiment in FIG. 26.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

In a possible implementation, the first network device is a first centralized unit CU, and the second network device is a second CU.

In a possible implementation, the first network device is a control plane CU-CP in a third CU, and the second network device is a CU-CP in a fourth CU.

In a possible implementation, the first network device is a fifth CU, and the second network device is a first DU connected to the fifth CU.

In a possible implementation, the first network device is a CU-CP in a sixth CU, and the second network device is a second DU connected to the CU-CP in the sixth CU.

In a possible implementation, the receiver 5001 is specifically configured to receive an RRC reconfiguration message, where the RRC reconfiguration message includes the random access configuration.

The communication apparatus shown in this embodiment of this application can perform the technical solution shown in the foregoing method embodiment. An implementation principle and a beneficial effect of the communication apparatus are similar to those of the foregoing method embodiment, and details are not described herein again.

Optionally, the processor may be a central processing unit (Central Processing Unit, CPU), or may be another general-purpose processor, a digital signal processor (Digital Signal Processor, DSP), an application-specific integrated circuit (Application Specific Integrated Circuit, ASIC), or the like. The general-purpose processor may be a microprocessor, any conventional processor, or the like. The steps in the embodiments of the communication method disclosed with reference to this application may be directly performed and accomplished by a hardware processor, or may be performed and accomplished by a combination of hardware and a software module in a processor.

This application provides a storage medium. The storage medium is configured to store a computer program, and the computer program is used to implement the communication method in the foregoing embodiment.

All or some of the steps in the method embodiments may be implemented by hardware related to program instructions. The foregoing program may be stored in a readable memory. When the program is executed, the steps in the foregoing method embodiments are performed. The foregoing memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processing unit of another programmable data processing device to generate a machine, so that instructions executed by the computer or the processing unit of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to the embodiments of this application without departing from the scope of this application. This application is intended to cover these modifications and variations of the embodiments of this application provided that they fall within the scope of protection defined by the following claims and their equivalent technologies.

In this application, the term "including" and a variant thereof may refer to non-limitative inclusion; and the term "or" and a variant thereof may refer to "and/or". In this application, the terms "first", "second", and the like are intended to distinguish between similar objects but do not necessarily indicate a specific order or sequence. In this application, "a plurality of' means two or more. The term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects.

## Claims

1. A communication method, comprising:
receiving, by a network device, first information sent by a terminal device, wherein the first information is information about a two-step random access process of the terminal device; and
updating, by the network device, a random access configuration based on the first information.

2. The method according to claim 1, wherein the first information comprises at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

3. The method according to claim 1 or 2, wherein
the random access configuration is a random access configuration corresponding to a cell in which the terminal device is located; or
the random access configuration is a random access configuration corresponding to a synchronization signal and physical broadcast channel block SSB used when the terminal device performs random access.

4. The method according to any one of claims 1 to 3, wherein the network device comprises a centralized unit CU and a distributed unit DU, and the CU is connected to the DU;
the receiving, by a network device, first information sent by a terminal device comprises:
receiving, by the CU, the first information sent by the terminal device;
the updating, by the network device, a random access configuration based on the first information comprises:
updating, by the CU, the random access configuration based on the first information; and
after the updating, by the CU, the random access configuration based on the first information, the method further comprises:
sending, by the CU, an updated random access configuration to the DU.

5. The method according to claim 4, wherein before the updating, by the CU, the random access configuration based on the first information, the method further comprises:
receiving, by the CU, the random access configuration sent by the DU.

6. The method according to any one of claims 1 to 3, wherein the network device comprises a CU and a DU, and the CU comprises a centralized unit-control plane CU-CP and a centralized unit-user plane CU-UP;
the receiving, by a network device, first information sent by a terminal device comprises:
receiving, by the CU-CP, the first information sent by the terminal device;
the updating, by the network device, a random access configuration based on the first information comprises:
updating, by the CU-CP, the random access configuration based on the first information; and
after the updating, by the CU-CP, the random access configuration based on the first information, the method further comprises:
sending, by the CU-CP, an updated random access configuration to the DU.

7. The method according to claim 6, wherein before the updating, by the CU-CP, the random access configuration based on the first information, the method further comprises:
receiving, by the CU-CP, the random access configuration sent by the DU.

8. The method according to any one of claims 1 to 7, wherein the random access configuration comprises at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

9. A communication method, comprising:
obtaining, by a terminal device, first information, wherein the first information is information about a two-step random access process of the terminal device; and
sending, by the terminal device, the first information to a network device, wherein the first information is used to enable the network device to update a random access configuration.

10. The method according to claim 9, wherein the first information comprises at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

11. The method according to claim 9 or 10, wherein
the random access configuration is a random access configuration corresponding to a cell in which the terminal device is located; or
the random access configuration is a random access configuration corresponding to a synchronization signal and physical broadcast channel block SSB used when the terminal device performs random access.

12. The method according to any one of claims 9 to 11, wherein the random access configuration comprises at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

13. A communication apparatus, comprising a receiver, a processor, and a memory, wherein the memory stores program instructions, and the processor executes the program instructions in the memory, wherein
the receiver is configured to receive first information sent by a terminal device, wherein the first information is information about a two-step random access process of the terminal device; and
the processor is configured to update a random access configuration based on the first information.

14. The apparatus according to claim 13, wherein the first information comprises at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

15. The apparatus according to claim 13 or 14, wherein
the random access configuration is a random access configuration corresponding to a cell in which the terminal device is located; or
the random access configuration is a random access configuration corresponding to a synchronization signal and physical broadcast channel block SSB used when the terminal device performs random access.

16. The apparatus according to any one of claims 13 to 15, wherein a network device comprises a centralized unit CU and a distributed unit DU, and the CU is connected to the DU; and the apparatus further comprises a transmitter, wherein
the transmitter is configured to send an updated random access configuration to the DU.

17. The apparatus according to claim 16, wherein
the receiver is further configured to: before the processor updates the random access configuration based on the first information, receive the random access configuration sent by the DU.

18. The apparatus according to any one of claims 13 to 15, wherein a network device comprises a CU and a DU, and the CU comprises a centralized unit-control plane CU-CP and a centralized unit-user plane CU-UP; and
a transmitter is further configured to send an updated random access configuration to the DU.

19. The apparatus according to claim 18, wherein
the receiver is further configured to: before the processor updates the random access configuration based on the first information, receive the random access configuration sent by the DU.

20. The apparatus according to any one of claims 13 to 19, wherein the random access configuration comprises at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

21. A communication apparatus, comprising a processor, a transmitter, and a memory, wherein the memory stores program instructions, and the processor executes the program instructions in the memory, wherein
the processor is configured to obtain first information, wherein the first information is information about a two-step random access process of a terminal device; and
the transmitter is configured to send the first information to a network device, wherein the first information is used to enable the network device to update a random access configuration.

22. The apparatus according to claim 21, wherein the first information comprises at least one of the following information:
a quantity of random access preambles sent by the terminal device in the two-step random access process;
indication information used to indicate whether contention of at least one random access preamble is detected in the sent random access preamble; and
indication information used to indicate whether contention of at least one time-frequency resource is detected in a time-frequency resource used for a sent payload.

23. The apparatus according to claim 21 or 22, wherein
the random access configuration is a random access configuration corresponding to a cell in which the terminal device is located; or
the random access configuration is a random access configuration corresponding to a synchronization signal and physical broadcast channel block SSB used when the terminal device performs random access.

24. The apparatus according to any one of claims 21 to 23, wherein the random access configuration comprises at least one of the following information: a physical random access channel PRACH configuration of the random access preamble in the two-step random access, a time-frequency resource configuration of the payload in the two-step random access, indication information used to indicate whether backoff from the two-step random access to four-step random access can be performed, a PRACH configuration of a random access preamble in the four-step random access, random access preamble split in the two-step random access, random access preamble split in the four-step random access, a random access backoff parameter in the two-step random access, a random access backoff parameter in the four-step random access, a random access transmission power control parameter in the two-step random access, and a random access transmission power control parameter in the four-step random access.

25. A computer-readable storage medium, wherein the storage medium is configured to store a computer program; and when the computer program is executed by a computer or a processor, the computer program is used to implement the communication method according to any one of claims 1 to 8.

26. A computer-readable storage medium, wherein the storage medium is configured to store a computer program; and when the computer program is executed by a computer or a processor, the computer program is used to implement the communication method according to any one of claims 9 to 12.
